# EUROPÄISCHE PATENTSCHRIFT

(11) **EP 3 408 555 B1**
(45) Veröffentlichungstag und Bekanntmachung des Hinweises auf die Patenterteilung: **25.11.2020**
(21) Anmeldenummer: 17716444.9
(22) Anmeldetag: 27.01.2017
(51) Int. Cl.: F16D 69/02, F16D 69/00

(54) **REIBWERTERHÖHENDE EINLAGE ZUM KRAFTSCHLÜSSIGEN VERBINDEN VON BAUTEILEN, VERFAHREN ZUR HERSTELLUNG EINER REIBWERTERHÖHENDEN EINLAGE UND VERFAHREN ZUR HERSTELLUNG EINES PRESSVERBANDS**
INSERT WHICH INCREASES THE COEFFICIENT OF FRICTION FOR THE NON-POSITIVE CONNECTION OF COMPONENTS, METHOD FOR PRODUCING AN INSERT WHICH INCREASES THE COEFFICIENT OF FRICTION, AND METHOD FOR PRODUCING A PRESS-FIT CONNECTION
INSERT AUGMENTANT LE COEFFICIENT DE FRICTION POUR L'ASSEMBLAGE À FORCE DE COMPOSANTS, PROCÉDÉ DE FABRICATION D'UN INSERT AUGMENTANT LE COEFFICIENT DE FRICTION ET PROCÉDÉ DE FABRICATION D'UN JOINT À AJUSTEMENT SERRÉ

(30) Priorität: 29.01.2016 DE 102016101684
(43) Veröffentlichungstag der Anmeldung: 05.12.2018
(60) Teilanmeldung: 20202714.0
(73) Patentinhaber: Carl Freudenberg KG, 69469 Weinheim (DE)
(72) Erfinder: SPETH, Willbald, 85283 Wolnzach (DE)
(86) Internationale Anmeldenummer: PCT/DE2017/100053
(87) Internationale Veröffentlichungsnummer: WO 2017/129182

(56) Entgegenhaltungen:
- EP-A1- 1 396 655
- DE-A1-102009 023 402
- US-A1- 2011 311 804

## Beschreibung

Die Erfindung betrifft eine Einlage zur Herstellung kraftschlüssiger Verbindungen. Kraftschlüssige Verbindungen dienen in vielen Bereichen der Technik dazu, Querkräfte und/oder Drehmomente zwischen Bauteilen (nachfolgend auch als Fügepartner bezeichnet) zu übertragen. Die Reibung zwischen zwei im Kontakt stehenden Partnern ist die Reaktion des vorliegenden tribologischen Systems auf eine zu den Bauteiloberflächen gerichtet wirkende Belastung, bei der Bauteile, während sie gegeneinander gepresst werden, relativ zueinander bewegt, beispielsweise gedreht und/oder verschoben) werden. Dabei bestimmen Adhäsionskräfte die Höhe der zwischen den kraftschlüssig miteinander verbundenen Fügeflächen übertragbaren Querkräfte oder Drehmomente. Die hierbei entstehende Tangentialkraft Ft hängt linear vom Reibungskoeffizienten µ der Werkstoffpaarung und der aufgebrachten Normalkraft F₀ linear ab. Allgemein gilt: Ft ≤ µ ·Fₙ (Coulomb'sches Reibungsgesetz). Hohe Reibwerte des tribologischen Systems haben demzufolge großes Potential, zur Steigerung der kraftschlüssig zu übertragenden Kräfte und Momente beizutragen. Bei einer Vervielfachung des Reibungskoeffizienten µ können somit entsprechend größere Kräfte und Momente übertragen bzw. die Anzahl an Verbindungselementen (sofern vorhanden; zum Beispiel Schrauben) und deren Abmessungen reduziert bzw. der Volumennutzwert erhöht werden. Typische Vertreter kraftschlüssiger Verbindungen sind z.B. (Stirn-) Pressverbindungen, Flanschverbindungen, Schraubverbindungen, Welle-Nabe-Verbindungen, Kegelpressverbindungen, u.a..

Der Reibungskoeffizient oder Haftbeiwert µ ist eine Systemgröße und hängt ab von der für die kraftschlüssige Verbindung verwendeten Werkstoffpaarung der Fügepartner, von der Oberflächenrauheit der Fügepartner, der Schmierung, der Temperatur, der Feuchte, dem Verschleiß, etc.. Bei einer trockenen Verbindung von Stahloberflächen beträgt der Reibungskoeffizient µ beispielsweise etwa 0,15, was bei zunehmenden Anforderungen an Maschinenbauteile häufig nicht ausreicht, um eine sichere kraftschlüssige Verbindung zwischen zwei Fügepartnern zu gewährleisen.

Eine Erhöhung des Reibungskoeffizienten µ kann dadurch erzielt werden, dass einer der Fügepartner mit einer reibwerterhöhenden Beschichtung versehen wird. Ein solches Verfahren ist beispielsweise in DE 101 48 831 A1 beschrieben. Dazu ist jedoch eine entsprechende Behandlung eines der Fügepartner erforderlich, was mit erheblichem Aufwand verbunden sein kann, beispielsweise wenn der Fügepartner sehr groß ist, komplexe Geometrien aufweist und/oder Bereiche während des Beschichtungsprozesses aufwendig geschützt werden müssen.

DE 10 2009 023 402 A1 offenbart einen Formkörper mit einem Substrat und einer darauf aufgebrachten, reibwerterhöhenden Schicht, die eine überwiegend anorganische Bindemittelmatrix und darin eingelagerte Hartstoffpartikel umfasst. Die Dicke der Bindemittelmatrix ist geringer als die mittlere Partikelgröße der Hartstoffpartikel, so dass die Hartstoffpartikel aus der Bindemittelmatrix herausragen. Die Hartstoffpartikel weisen vorzugsweise eine mittlere Partikelgröße von 1-100 µm auf. Als Substratwerkstoff eignen sich metallische, aber auch keramische Werkstoffe, Glas, Kunststoff, Papier, Gewebe und Holz. Im Fall von Metall, Kunststoff, Papier oder Gewebe kann die Dicke des Substrats beispielsweise 0,1 mm betragen.

Die Aufgabe der vorliegenden Erfindung besteht darin, eine verbesserte Lösung bereitzustellen, mit der sich ein Pressverband mit hohem Reibungskoeffizienten einfach, flexibel und kostengünstig herstellen lässt. Diese Aufgabe wird durch eine reibwerterhöhende Einlage gemäß Patentanspruch 1, durch ein Verfahren zur Herstellung einer reibwerterhöhenden Einlage gemäß Patentanspruch 12 und durch ein Verfahren zur Herstellung eines Pressverbands gemäß Patentanspruch 15 gelöst. Ausgestaltungen und Weiterbildungen der Erfindung sind Gegenstand von Unteransprüchen.

Ein erster Gesichtspunkt betrifft eine reibwerterhöhende Einlage. Diese weist einen komprimierbaren Kompositträger und eine Vielzahl von harten Kernen auf, von denen jeder einen volumenäquivalenten Kugeldurchmesser von wenigstens 8 µm besitzt. Der Kompositträger weist zum einen Glas und/oder Keramik auf, zum anderen einen als Vlies ausgebildeten Kunststoffträger. Jeder der harten Kerne ist mittels eines Haftvermittlers stoffschlüssig mit dem Kompositträger verbunden. Der unkomprimierte Kompositträger weist eine Dicke im Bereich von 10 µm bis 100 µm auf, und/oder die reibwerterhöhende Einlage weist bei unkomprimiertem Kompositträger eine Dicke von kleiner oder gleich 420 µm auf.

Ein zweiter Gesichtspunkt betrifft ein Verfahren, mit dem eine reibwerterhöhende Einlage hergestellt wird, die gemäß dem ersten Gesichtspunkt ausgebildet ist. Hierzu wird ein Kompositträger bereitgestellt, der zum einen Glas und/oder Keramik aufweist, und zum anderen einen als Vlies ausgebildeten Kunststoffträger. Ebenfalls bereitgestellt wird eine Vielzahl harten Kernen, von denen jeder einen volumenäquivalenten Kugeldurchmesser von wenigstens 8 µm aufweist. Die harten Kerne werden mittels eines thermisch und/oder chemisch aktivierten Haftvermittlers stoffschlüssig mit dem Kompositträger verbunden. Der Haftvermittler kann während zumindest einer, d.h. während genau einer oder während einer beliebigen Kombination der folgenden Phasen mit den harten Kernen in Kontakt gebracht werden: vor, während bzw. nach dem Aufbringen der harten Kerne auf den Kompositträger.

Ein dritter Gesichtspunkt betrifft ein Verfahren zur Herstellung eines Pressverbands zwischen einem ersten Fügepartner und einem zweiten Fügepartner. Hierzu werden der erste Fügepartner und der zweite Fügepartners, während zwischen ihnen eine gemäß dem ersten Gesichtspunkt ausgebildete und/oder dem zweiten Gesichtspunkt hergestellte, reibwerterhöhende Einlage angeordnet ist, so gegeneinander gepresst, dass von einer Mehrzahl der harten Kerne jeder jeweils teilweise sowohl in den ersten Fügepartner als auch in den zweiten Fügepartner eingepresst wird.

Die Erfindung wird nachfolgend anhand von Ausführungsbeispielen unter Bezugnahme auf die beigefügten Figuren erläutert. Es zeigen:
- Figur 1A: einen Querschnitt durch ein Korn, das einen harten Kern dessen Oberfläche vollständig mit einem Haftvermittler beschichtet ist.
- Figur 1B: einen Querschnitt durch ein Korn, das einen harten Kern aufweist, dessen Oberfläche teilweise mit einem Haftvermittler beschichtet ist.
- Figur 2: den unbeschichteten harten Kern eines Korns, wie es in den Figuren 1A und 1B gezeigt ist.
- Figur 3: einen Querschnitt durch einen Kompositträger, der ein Vlies aufweist.
- Figur 4: einen Querschnitt durch eine reibwerterhöhende Einlage, die einseitig mit harten Kernen versehen ist.
- Figur 5: einen Querschnitt durch zwei Fügepartner, zwischen die zur Ausbildung eines Pressverbands eine reibwerterhöhende Einlage eingebracht wird, vor der Herstellung des Pressverbands.
- Figur 6: einen Querschnitt durch den mit den beiden Fügepartnern und der reibwerterhöhenden Einlage gebildeten Pressverband, wobei der Kompositträger komprimiert ist.
- Figur 7: einen Querschnitt durch zwei Fügepartner, zwischen die zur Ausbildung eines Pressverbands eine reibwerterhöhende Einlage eingebracht wird, die beidseitig mit harten Kernen versehen ist, vor der Herstellung des Pressverbands.
- Figur 8: eine Draufsicht auf eine reibwerterhöhende Einlage.
- Figur 9: eine Draufsicht auf eine reibwerterhöhende Einlage, deren Kompositträger einen Kunststoffträger aufweist, der als Vlies ausgebildet ist.
- Figur 10: ein Verfahren, bei dem der Haftvermittler, mit dem harte Kerne beschichtet sind, mittels eines Plasmas aktiviert und auf einen Kompositträger aufgebracht werden.
- Figur 11: ein Verfahren, bei dem harte Kerne durch Kalandrieren auf einen Kompositträger aufgebracht werden.
- Figur 12: ein Verfahren, bei dem harte Kerne mittels eines Rakels auf einen Kompositträger aufgebracht werden.
- Figur 13A: die reibwerterhöhende Einlage gemäß Figur 4, wobei zusätzlich eine Schnittebene E1-E1 dargestellt ist.
- Figur 13B: einen Querschnitt durch die reibwerterhöhende Einlage gemäß Figur 13A in der in Figur 13A gezeigten Schnittebene E1-E1.
- Figur 14: ein Beispiel für die Montage eines Zahnrades an einer Welle unter Verwendung einer erfindungsgemäßen Einlage.

In den Figuren bezeichnen gleiche Bezugszeichen gleiche Elemente.

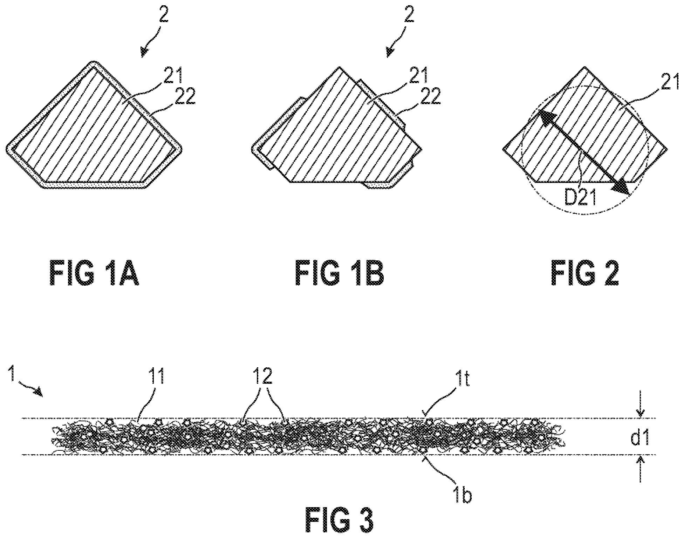

Figur 1A zeigt einen Querschnitt durch ein Korn 2, das einen harten Kern 21 aufweist, der mit einem Haftvermittler 22 beschichtet ist. Der harte Kern 21 dient später dazu, die Reibung zwischen zwei kraftschlüssig zu koppelnden Fügepartnern zu erhöhen. Deshalb ist es vorteilhaft, wenn der harte Kern 21 eine große mechanische Härte aufweist. Beispielsweise können derartige harte Kerne 21 jeweils eine Mohs-Härte von wenigstens 8 aufweisen. Solche harten Kerne 21 können beispielsweise aus einem der folgenden Materialen bestehen oder zumindest eines der folgenden Materialien aufweisen: Diamant; ein Carbid (z.B. Siliziumcarbid SiC, Wolframcarbid WC oder Borcarbid B₄C); ein Nitrid (z.B. Siliziumnitrid Si₃N₄ oder kubisches Bornitrid BN); ein Borid (z.B. Titanborid); ein Oxid (z.B Siliziumdioxid SiO₂ oder Aluminiumoxid Al₂O₃). Grundsätzlich können jedoch auch beliebige andere harte Materialien verwendet werden.

Die für die harten Kerne 21 genannten Materialien bzw. Materialgruppen zeichnen sich dadurch aus, dass sie eine höhere Druck- und Scherfestigkeit aufweisen, als die Materialien (z.B. Stahl), die typische Fügepartner an ihren Fügeflächen besitzen. Dies ermöglicht es, dass die harten Kerne 21 beim Aneinanderpressen der Fügeflächen einen guten Formschluss ermöglichen, indem sie jeweils in jeden der Fügepartner teilweise eindringen und dadurch eine Kraftübertragung zwischen den Fügepartnern ermöglichen. Der Kompositträger hingegen bewirkt keine Kraftübertragung zwischen den Fügepartnern.

Weiterhin kann es vorteilhaft sein, wenn die harten Kerne 21 chemisch inert sind, so dass sie bei den jeweiligen Einsatzbedingungen chemisch weder mit den Werkstoffen der zu fügenden Fügepartner noch mit der umgebenden Atmosphäre reagieren. Hierdurch kann verhindert werden, dass sich die Qualität der herzustellenden kraftschlüssigen Verbindung aufgrund von Korrosionseffekten im Lauf der Zeit verschlechtert.

Wie nachfolgend noch ausführlicher erläutert wird, wird zur Herstellung einer reibwerterhöhenden Einlage eine Vielzahl von harten Kernen 21 an einem Kompositträger 1 angebracht. Um ein Anhaften der harten Kerne 21 an dem Kompositträger 1 zu ermöglichen, wird ein Haftvermittler 22 eingesetzt.

Gemäß einer Ausführungsform kann Metall als Haftvermittler 22 verwendet werden. Ein metallischer Haftvermittler 22 ist hervorragend dazu geeignet, ein vorzeitiges Ablösen der harten Kerne 21 von der beschichteten Oberfläche des Kompositträgers 1 zu verhindern. Als Metall für den Haftvermittler 22 eignet sich beispielsweise Nickel. Grundsätzlich können jedoch auch andere Metalle, z. B. Kupfer, Cobalt, Chrom, Zink, eine Kupferlegierung, eine Legierung auf Kupfer-Zinn-Basis oder eine Nickellegierung, als Haftvermittler eingesetzt werden. Im Fall eines metallischen Haftvermittlers 22 kann dieser mittels elektrolytischer und/oder chemischer (stromloser) Abscheidung oder mittels eines PVD-Verfahrens auf dem harten Kern 21 erzeugt werden.

Gemäß anderen Ausführungsformen können als Haftvermittler Polymere oder organische Materialien eingesetzt werden, soweit sie thermisch gegenüber den im Herstellungsprozess auftretenden Maximaltemperaturen beständig sind.

Bei dem Beispiel gemäß Figur 1A ist der harte Kern 21 vollständig mit dem Haftvermittler 22 beschichtet, so dass der harte Kern 21 an keiner Stelle frei liegt. Ebenso kann ein harter Kern 21 aber auch nur teilweise mit einem Haftvermittler 22 beschichtet sein, was in Figur 1B gezeigt ist.

Idealerweise liegt der Anteil des Haftvermittlers 22 eines Korns 2 im Bereich von 5 Gew% (Gewichtsprozent) und 80 Gew% vom Gewicht des Korns 2. Im Fall eines metallischen Haftvermittlers 22 liegt dieser Anteil bevorzugt im Bereich von 30 Gew% und 70 Gew%, im Fall eines Haftvermittlers 22 aus Kunststoff im Bereich von 5 Gew% und 50 Gew%. Bei einer Belegung der Oberfläche von weniger als 5 Gew% besteht die Gefahr, dass der harte Kern 21 später nicht mehr zuverlässig an dem Kompositträger 1 anhaftet. Bei einer Belegung von mehr als 80% der Oberfläche hingegen wird der Effekt der Erhöhung der Haftreibung durch die Gleiteigenschaften des Haftvermittlers 22 verringert. Alternativ oder zusätzlich können die genannten Werte auch für die betreffenden Mittelwerte (arithmetisches Mittel) der Gewichtsanteile gelten, beispielsweise für eine Vielzahl von Körnern 2, deren harte Kerne 21 später mittels des Haftvermittlers 22 an einem Kompositträger 1 angebracht werden, was nachfolgend noch ausführlicher erläutert wird. Anders ausgedrückt bedeutet das, dass bei einem jeden der bereitgestellten Körner 2 der Haftvermittler 22, mit dem das betreffende Korn 2 beschichtet ist, einen Gewichtsanteil (ausgedrückt in Gewichtsprozent) ausmacht, wobei der Mittelwert dieser Gewichtsanteile im Bereich von 5 Gew.% bis 80 Gew.% liegt, im Fall eines metallischen Haftvermittlers 22 bevorzugt im Bereich von 30 Gew% und 70 Gew%, im Fall eines Haftvermittlers 22 aus Kunststoff bevorzugt im Bereich von 5 Gew% und 50 Gew%.

Wie in Figur 2 veranschaulicht ist, kann jedem harten Kern 21 ein volumenäquivalenter Kugeldurchmesser D21 zugeordnet werden. Es handelt sich dabei um den Durchmesser D21 einer Kugel, die dasselbe Volumen aufweist wie der harte Kern 21.

Figur 3 zeigt einen Querschnitt durch einen Kompositträger 1. Der Kompositträger 1 weist einen aus Kunststoff 11 bestehenden Träger (nachfolgend auch als "Kunststoffträger" bezeichnet) auf, sowie Glas und/oder Keramik. Das Glas und/oder die Keramik kann beispielsweise in Form von Partikeln 12 vorliegen, die jeweils Glas- und/oder Keramik enthalten oder die jeweils aus Glas und/oder Keramik bestehen. Die Partikel 12 können ebenfalls unter Verwendung eines Haftvermittlers (nicht gezeigt) mit dem Kunststoff 11 verbunden sein. Um dies zu erreichen kann der Kunststoffträger 11 beispielsweise in eine Emulsion getaucht werden, die den Haftvermittler (zum Beispiel ein Harzsystem), ein Lösemittel und die Partikel 12 enthält. Wenn das Lösemittel nach dem Tauchen verdunstet, bewirkt der zurückbleibende Haftvermittler eine Verklebung zwischen den Partikeln 12 und dem Kunststoffträger 11.

Wie dargestellt kann es sich bei einem aus Kunststoff 11 bestehenden Träger um eine Textilie handeln, d.h. um ein aus zusammenhängenden Fasern bestehendes Gebilde. Die Art und Weise, durch die der Zusammenhalt der Fasern begründet wird, ist grundsätzlich beliebig. Geeignete Arten von Textilien sind beispielsweise Vliese (Vliesstoffe), Gewebe, Gewirke, Gelege, Geflechte, Filze. Bei dem Beispiel gemäß Figur 3 bildet der Kunststoff 11 einen Träger in Form eines Vlieses.

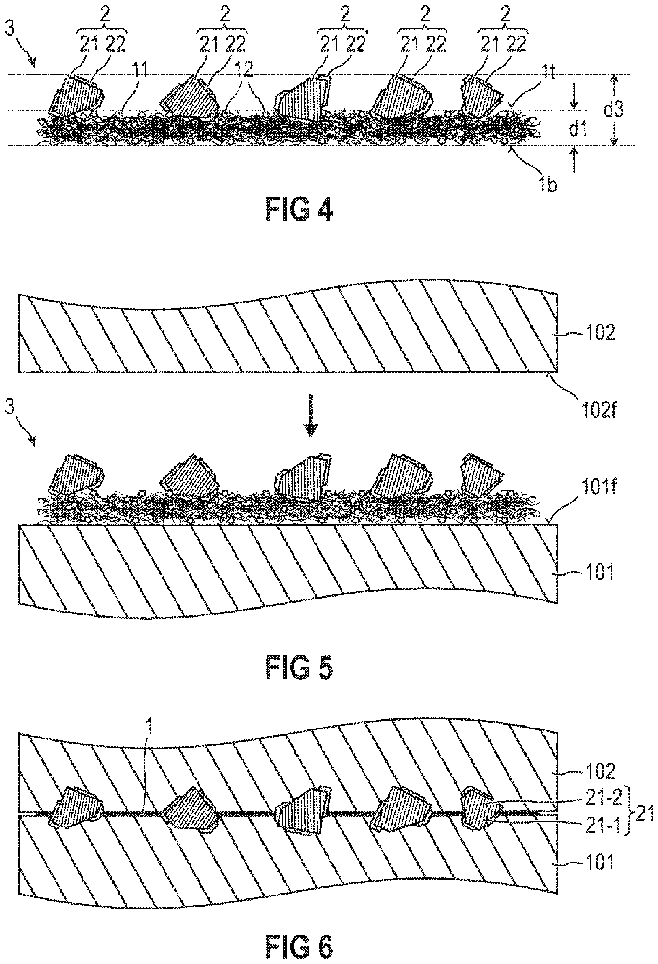

Wie im Ergebnis in Figur 4 lediglich beispielhaft anhand des in Figur 3 erläuterten Kompositträgers 1 dargestellt ist, werden unter Verwendung von Körnern 2, wie sie vorangehend unter Bezugnahme auf die Figuren 1A, 1B und 2 erläutert wurden, die harten Kerne 21 angebracht. Dabei sind die harten Kerne 21 der Körner 2 vor dem Anbringen jeweils vollständig oder teilweise mit einem Haftvermittler 22 beschichtet. Aufgrund des Haftvermittlers 22 haften die harten Kerne 21 der Körner 2 an dem Kompositträger 1. Anstelle eines gemäß Figur 3 ausgebildeten Kompositträgers 1 kann auch jeder andere geeignete Kompositträger 1, insbesondere jeder der vorangehend erläuterten Kompositträger 1, verwendet werden. Die Dicke d3, die die fertige Einlage 3 im unkomprimierten Zustand des Kompositträgers 1 aufweist, kann, auch bei allen anderen Ausgestaltungen der Erfindung, sehr gering sein, beispielsweise kann sie kleiner oder gleich 420 µm sein, bevorzugt kleiner oder gleich 320 µm, und besonders bevorzugt kleiner oder gleich 200 µm. Je kleiner die Dicke d3 der Einlage 3 ist, in desto mehr unterschiedlichen Applikationen kann die Einlage 3 eingesetzt werden, ohne dass die Abmessungen der Fügepartner 101 und/oder 102 (siehe die Figuren 4, 5, 6 und 14) an die Einlage 3, d.h. an deren Dicke d3, angepasst werden müssen.

Die Dicke d1 nur des Kompositträgers 1 durch den kleinstmöglichen Abstand gegeben, den zwei parallele Ebenen aufweisen können, zwischen denen der unkomprimierte Kompositträger 1 angeordnet werden kann und die den Kompositträger 1 jeweils tangieren.

Analog dazu ist die Dicke d3 der Einlage 3 ist durch kleinstmöglichen Abstand gegeben, den zwei parallele Ebenen aufweisen können, zwischen denen die Einlage 3 bei unkomprimiertem Kompositträgerl angeordnet werden kann und die die Einlage 3 jeweils tangieren.

Figur 5 zeigt einen Querschnitt durch zwei Fügepartner 101 und 102, die jeweils eine Fügefläche 101f bzw. 102f aufweisen, an denen eine kraftschlüssige Verbindung zwischen den Fügepartnern 101 und 102 gebildet werden soll. Hierzu wird eine reibwerterhöhende Einlage 3, wie sie vorangehend erläutert wurde, zwischen die Fügeflächen 101f und 102f und damit zwischen die Fügepartner 101 und 102 eingebracht. Danach werden die Fügepartner 101 und 102 mit ihren Fügeflächen 101f und 102f gegeneinander gepresst, während sich die reibwerterhöhende Einlage 3 zwischen ihnen befindet. Hierdurch dringen die harten Kerne 21 im Bereich der Fügeflächen 101f und 102f in die Fügepartner 101 bzw. 102 jeweils teilweise ein. Nähert man die Fügeflächen 101f und 102f ausreichend aneinander an und presst sie mit hohem Anpressdruck aneinander, so lässt sich erreichen, dass die Mehrzahl der harten Kerne 21 jeweils sowohl in den ersten Fügepartner 101 als auch in den zweiten Fügepartner 102 ein Stück weit eingepresst wird, so dass lokal im Bereich der harten Kerne 21 jeweils ein Mikroformschluss entsteht, was insgesamt zu einem hervorragenden Kraftschluss zwischen den Fügepartnern 101 und 102 führt. Der sehr dünne Kompositträger 1 kann durch das Aneinanderpressen zunächst komprimiert und im weiteren Verlauf zerstört werden, da dessen Funktion, die Körner 2 in handhabbarer Weise zu fixieren, nicht mehr benötigt wird. Von daher ist es generell, d.h. unabhängig vom sonstigen Aufbau des Kompositträgers 1, günstig, wenn dieser gut komprimierbar ist. Hierzu ist es vorteilhaft, wenn der Kompositträger 1 eine hohe Porosität aufweist. Als "Porosität" wird dabei das Verhältnis V_{H} / V_{G} zwischen dem in dem Kompositträger 1 enthaltenen Hohlraumvolumen V_{H} und dem Gesamtvolumen V_{G} des Kompositträgers 1 verstanden. Das Hohlraumvolumen V_{H} ist das das gesamte in dem Kompositträger 1 enthaltene Gasvolumen (z.B. Luft). Je geringer die Porosität ist, desto höher ist im Allgemeinen die erzielbare mechanische Stabilität des Kompositträgers 1. Andererseits ist die Komprimierbarkeit des Kompositträgers 1 umso höher, je höher die Porosität ist. Anhand von Versuchen konnte ermittelt werden, dass eine günstiger Bereich für die Porosität des Kompositträgers 1 wenigstens 15% beträgt. Beispielsweise kann die Porosität des Kompositträgers 1 zwischen 30% und 70%, betragen. Je geringer die Porosität ist, desto höher ist im Allgemeinen die erzielbare mechanische Stabilität des Kompositträgers 1. Andererseits ist die Komprimierbarkeit des Kompositträgers 1 umso höher, je höher die Porosität ist.

Der Kompositträger 1 nimmt somit nicht an der Kraftübertragung zwischen den Fügepartnern 101 und 102 teil. Im Fall eines metallischen Haftvermittlers 22 sorgt dieser zusätzlich für eine Verklammerung der harten Kerne 21 in den Fügepartnern 101 und 102, so dass die Verbindung zwischen den Fügepartnern 101 und 102 ohne Performanceverluste reversibel gelöst und erneut gefügt werden kann.

An ihren dem Kompositträger 1 abgewandten Seiten können die harten Kerne 21 frei liegen, d.h. sie sind dort nicht zwingend von dem Haftvermittler 22 bedeckt. Wenn eine solche Ausgestaltung vorliegt, drücken sich bei dem Fügeprozess die harten Kerne 21 mit ihren frei liegenden Bereichen voran in denjenigen der Fügepartner 102, der sich beim Fügevorgang auf der dem Kompositträger 1 abgewandten Seite der Körner 2 befindet.

Um einen guten Kraftschluss zwischen den Fügepartnern 101 und 102 zu erzielen, ist es außerdem vorteilhaft, wenn sich die volumenäquivalenten Kugeldurchmesser D21 der harten Kerne 21 der reibwerterhöhenden Einlage 3 nicht allzu sehr unterscheiden. Betrachtet man die Gesamtheit aller harten Kerne 21 der reibwerterhöhenden Einlage 3, die jeweils einen volumenäquivalenten Kugeldurchmesser D21 von wenigstens 8 µm aufweisen (siehe Figur 2), so lässt sich ein mittlerer volumenäquivalenter Kugeldurchmesser <D21> dieser harten Kerne 21 bilden, der durch den arithmetischen Mittelwert der volumenäquivalenten Kugeldurchmesser D21 der einzelnen dieser harten Kerne 21 gegeben ist. Ein mittlerer volumenäquivalenter Kugeldurchmesser <D21> der Gesamtheit der harten Kerne 21 im Bereich von 8µm bis 150 µm, vorzugsweise im Bereich von 15 µm bis 100 µm, hat sich als vorteilhaft erwiesen. Bei einem mittleren volumenäquivalenten Kugeldurchmesser <D21> von weniger als 8µm dringen die harten Kerne 21 im Schnitt nicht mehr weit genug in die Fügepartner 101 und 102 ein, um einen optimalen Kraftschluss zwischen den Fügepartnern 101 und 102 zu bewirken. Bei einem mittleren volumenäquivalenten Kugeldurchmesser <D21> von mehr als 150 µm besitzt ein Großteil der harten Kerne 21 einen sehr großen volumenäquivalenten Kugeldurchmesser D21, so dass es bei bestimmten Anwendungen vorkommen kann, dass die verfügbare und/oder zulässige Anpresskraft nicht mehr ausreicht, um die harten Kerne 21 tief in die Fügepartner 101 und 102 einzupressen.

Die Bestimmung des mittleren volumenäquivalenten Kugeldurchmesser <D21> bzw. der Größenverteilung der volumenäquivalenten Kugeldurchmesser D21 der harten Kerne 21 kann beispielsweise auf Grundlage der ISO 13320:2009 in der am 13.01.2016 geltenden Fassung durch Laserbeugung erfolgen. Zur Messung geeignet ist zum Beispiel das Partikelgrößenmessgerät "Mastersizer 3000" von Malvern Instruments Ltd. (UK). Die damit ermittelten Partikelgrößen lassen sich in ausreichend guter Näherung in volumenäquivalente Kugeldurchmesser umrechnen.

Die Größe der Partikel (z.B. der harten Kerne 21 oder der Körner 2) bzw. deren Größenverteilung kann, beispielweise bevor die Partikel auf auf den Kompositträger 1 aufgebracht werden, zum Beispiel mit Hilfe von Laserbeugung ermittelt werden. Dabei wird die Intensität des durch die dispergierte Partikelprobe gestreuten Lichts eines Laserstrahls gemessen. Aus dem erzeugten Beugungsmuster wird die Größe der Partikel berechnet.

Um zu erreichen, dass sich die harten Kerne 21 gut in die Fügepartner 101 und 102 einpressen lassen, können die harten Kerne 21 eine Druckfestigkeit und eine Scherfestigkeit aufweisen, die höher ist, als die Druckfestigkeit und die Scherfestigkeit, die ein jeder der Fügepartner 101 und 102 an seiner Fügefläche 101f bzw. 102f aufweist. Beispielsweise können derartige harte Kerne 21 jeweils eine Mohs-Härte von wenigstens 8 aufweisen, was ausreicht, damit sie sich auch in technischen Stahl einpressen lassen, wie er üblicherweise im Maschinenbau Verwendung findet.

Im Hinblick auf eine optimale reibwerterhöhende Wirkung, d.h. eine gute, zur Kraftübertragung zwischen den Fügepartnern 101 und 102 ausreichende Verbindung, hat es sich als vorteilhaft erwiesen, wenn diejenigen der harten Kerne 21 der Gesamtheit der einen volumenäquivalenten Kugeldurchmesser D21 von wenigstens 8 µm aufweisenden harten Kerne 21, die einen volumenäquivalenten Kugeldurchmesser D21 von kleiner als 35 µm aufweisen, eine erste Teilmenge bilden, und diejenigen der harten Kerne 21 der Gesamtheit der einen volumenäquivalenten Kugeldurchmesser D21 von wenigstens 8 µm aufweisenden harten Kerne 21, die einen volumenäquivalenten Kugeldurchmesser D21 von größer oder gleich 35 µm aufweisen, eine zweite Teilmenge bilden, derart, dass die harten Kerne 21 der ersten Teilmenge einen ersten mittleren volumenäquivalenten Kugeldurchmesser im Bereich von 10 µm bis 30 µm aufweisen, und die harten Kerne 21 der zweiten Teilmenge einen zweiten mittleren volumenäquivalenten Kugeldurchmesser im Bereich von mehr als 30 µm bis 145 µm. Die ersten und zweiten mittleren volumenäquivalenten Kugeldurchmesser ergeben sich dabei aus dem arithmetischen Mittel aller volumenäquivalenten Kugeldurchmesser D21 der ersten bzw. der zweiten Teilmenge. Eine derartige Größenverteilung der einen volumenäquivalenten Kugeldurchmesser D21 von wenigstens 8 µm aufweisenden harten Kerne 21 kann auch als "bimodal" bezeichnet werden.

Eine derartige bimodale Größenverteilung der harten Kerne 21 kann die Reibung zwischen den beiden Fügepartnern 101 und 102 im Vergleich zu einer einfachen unimodalen Größenverteilung deutlich erhöhen. Verbindet man zwei Fügepartner 101 und 102 unter Verwendung einer Einlage 3, bei der der Kompositträger 1 nur mit harten Kernen 21 versehen ist, deren Größenverteilung der Größenverteilung der zweiten Teilmenge entspricht, so ist eine gewisse Anpresskraft erforderlich, um die vergleichsweise großen harten Kerne 21 ausreichend in die Fügepartner 101 und 102 einzupressen. Würde man die Anzahl der vergleichsweise großen harten Kerne 21 erhöhen, so reicht irgendwann die verfügbare Anpresskraft nicht mehr aus, um die vergleichsweise großen harten Kerne 21 so weit in die Fügepartner 101 und 102 einzupressen, dass die Fügepartner 101 und 102 aneinander oder nahezu aneinander anliegen. In diesem Fall käme es nicht mehr zu einer Fügung auf oder nahe einem Nullspalt. Wählt man nun die Anzahl der vergleichsweise großen harten Kerne 21 der Einlage 3 so, dass ein Fügen auf oder nahe einem Nullspalt bei der verfügbaren Anpresskraft noch möglich ist, und fügt der Einlage 3 gedanklich noch die vergleichsweise kleinen harten Kerne 21 der ersten Teilmenge hinzu, so können diese vergleichsweise kleinen harten Kerne 21 noch mit vergleichsweise wenig Kraft in die Fügepartner 101 und 102 eingepresst werden, da die vergleichsweise kleinen harten Kerne 21 aufgrund ihrer geringeren Größe weniger Material der Fügepartner 101 und 102 verdrängen und die mit dem Einpressen der vergleichsweise kleinen harten Kerne 21 verbundenen Setzungsvorgänge nicht so stark sind, wie bei den vergleichsweise großen harten Kernen 21. Wenn also die Einlage 3 ergänzend mit vergleichsweise kleine harten Kernen 21 versehen wird, so können diese relativ leicht in die Fügepartner 101 und 102 eingepresst werden und dazu beitragen, die Reibung zwischen den Fügepartnern 101 und 102 zu erhöhen.

Wie bereits erwähnt weisen diejenigen der harten Kerne 21 der reibwerterhöhenden Einlage 3, deren volumenäquivalenter Kugeldurchmesser D21 wenigstens 8 µm beträgt, einen mittleren volumenäquivalenten Kugeldurchmesser <D21> auf. Optional kann die Größenverteilung dieser harten Kerne 21 so gewählt sein, dass höchstens 10% dieser harten Kerne 21 einen volumenäquivalenten Kugeldurchmesser D21 aufweisen, der um mehr als 5 µm kleiner ist, als der mittlere volumenäquivalenten Kugeldurchmesser <D21>, und dass höchstens 10% dieser harten Kerne 21 einen volumenäquivalenten Kugeldurchmesser D21 aufweisen, der um mehr als 5 µm größer ist, als der mittlere volumenäquivalenten Kugeldurchmesser <D21>. Damit kann erreicht werden, dass eine wesentliche Teilmenge der harten Kerne 21 auch wirkungsvoll dazu beiträgt, die Reibung zwischen den beiden Fügepartnern 101 und 102 zu erhöhen. Beim Aneinanderpressen der Fügepartner 101 und 102 mit der zwischen ihnen befindlichen Einlage 3 werden nämlich zunächst die vergleichsweise sehr großen harten Kerne 21 zuerst in die Fügepartner 101 und 102 eingepresst, während auf die kleineren der harten Kerne 21 noch keine Anpresskraft wirkt. Wenn nun sehr viele vergleichsweise große harte Kerne 21 vorhanden sind, so kann es sein, dass die verfügbare Anpresskraft bereits von diesen aufgenommen wird und die kleineren der harten Kerne 21 nicht oder zumindest nicht mehr signifikant in die Fügepartner 101 und 102 eingepresst werden und somit keinen Beitrag zur Reibungserhöhung mehr leisten. Wenn anderenfalls nur sehr wenige vergleichsweise große harte Kerne 21 vorhanden sind, verteilt sich die verfügbare Anpresskraft während des Aneinanderpressens zunächst nur auf diese vergleichsweise großen harten Kerne 21. Dies führt dazu, dass diese vergleichsweise großen harten Kerne 21 nahezu vollständig in die Fügepartner 101 und 102 eingepresst werden mit der Folge, dass im weiteren Verlauf des Aneinanderpressens auch auf die kleineren der harten Kerne 21 eine Anpresskraft wirkt, durch die sie in die Fügepartner 101 und 102 eingepresst werden und somit einen Beitrag zur Reibungserhöhung leisten.

Optional können sämtliche harten Kerne 21 einer reibwerterhöhenden Einlage 3 so ausgewählt sein, dass keiner von ihnen einen volumenäquivalenten Kugeldurchmesser D21 von mehr als 100 µm aufweist. Hierdurch wird das Risiko verringert, dass sich in den Fügepartnern 101, 102 Risse bilden, die von den in die Fügepartner 101, 102 einpressten, harten Kernen 21 ausgehen und sich ausbreiten.

Wie den Figuren 3 und 4 zu entnehmen ist, weist der Kompositträger 1 eine erste Hauptseite 1t und eine der ersten Hauptseite 1t entgegengesetzte zweite Hauptseite 1b auf. Als Hauptseiten 1t, 1b werden dabei die beiden flächenmäßig größten Seiten des Kompositträgers 1 angesehen. Wie anhand der in Figur 4 gezeigten, reibwerterhöhenden Einlage 3 beispielhaft dargestellt ist, kann die Gesamtheit der harten Kerne 21 der reibwerterhöhenden Einlage 3, die jeweils einen volumenäquivalenten Kugeldurchmesser D21 von wenigstens 8 µm aufweisen, nur an und/oder auf der ersten Hauptseite 1t angeordnet sein, nicht aber an oder auf der zweiten Hauptseite 1b. Dies reicht zur Erzielung einer reibwerterhöhenden Wirkung aus, da der Kompositträger 1 beim Gegeneinanderpressen des ersten Fügepartners 101 und des zweiten Fügepartners 102 komprimiert wird, so dass die Körner 2 bzw. deren harte Kerne 21 an der zweiten Seite 1b des komprimierten Kompositträger 1 aus diesem heraus ragen, weil sie quasi durch den Kompositträger 1 hindurch gepresst werden. Dadurch kann ein harter Kern 21 nach dem Gegeneinanderpressen des ersten Fügepartners 101 und des zweiten Fügepartners 102 einen ersten Abschnitt 21-1 aufweisen, der in den ersten Fügepartner 101 eingepresst ist, und einen zweiten Abschnitt 21-2, der in den zweiten Fügepartner 102 eingepresst ist, was in Figur 6 gezeigt ist. Wenn die Gesamtheit der Körner 2 der Einlage 3, deren harte Kerne 21 jeweils einen volumenäquivalenten Kugeldurchmesser D21 von wenigstens 8 µm aufweisen, nur an und/oder auf der ersten Hauptseite 1t angeordnet sind, nicht aber an oder auf der zweiten Hauptseite 1b, so kann dies den Herstellungsprozess vereinfachen.

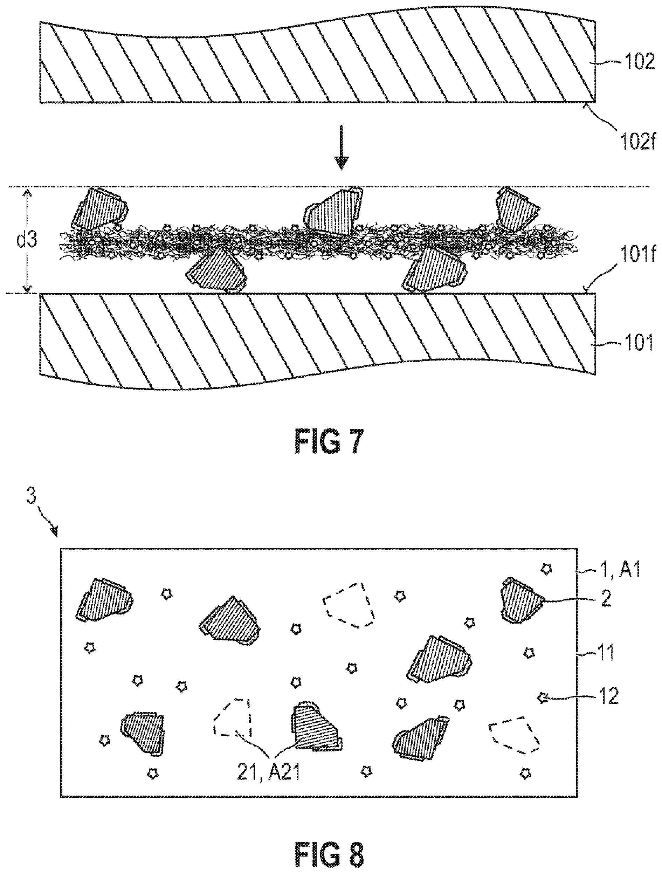

Selbstverständlich kann von der Gesamtheit der Körner 2 der Einlage 3, deren harte Kerne 21 jeweils einen volumenäquivalenten Kugeldurchmesser D21 von wenigstens 8 µm aufweisen, eine erste Teilmenge an und/oder auf der ersten Hauptseite 1t angeordnet sein, und eine zweite Teilmenge an oder auf der zweiten Hauptseite 1b. Ein Beispiel hierfür zeigt Figur 7, in der eine solche reibwerterhöhende Einlage bereits zwischen die Fügepartner 101 und 102 eingebracht ist.

Unabhängig davon, in welcher räumlichen Verteilung die harten Kerne 21 auf dem Kompositträger 1 angeordnet sind, kann der unkomprimierte Kompositträger 1, unabhängig von seiner sonstigen Ausgestaltung, eine Dicke d1 aufweisen, die kleiner ist, als der mittlere volumenäquivalente Kugeldurchmesser <D21> der Gesamtheit aller einen volumenäquivalenten Kugeldurchmesser D21 von wenigstens 8 µm aufweisenden harten Kerne 21 der Einlage 3. Hierdurch kann erreicht werden, dass auch ein Kompositträger 1 den Fügeprozess zwischen den Fügepartnern 101 und 102 nicht behindert, insbesondere dann, wenn ein mechanisch stabiler Kompositträger 1 gewählt wird, was nicht grundsätzlich möglich ist Beispielsweise kann dieser mittlere volumenäquivalente Kugeldurchmesser <D21> wenigstens 35 µm betragen, und die Dicke d1 des unkomprimierten Kompositträgers 3 kann kleiner sein, als 30 µm.

Grundsätzlich kann der unkomprimierte Kompositträger 1 aber auch eine Schichtdicke d1 aufweisen, die größer oder gleich dem genannten mittleren volumenäquivalenten Kugeldurchmesser <D21> ist. Wenn die Schichtdicke d1 des unkomprimierten Kompositträger 1 deutlich größer ist, als der genannte mittlere volumenäquivalenten Kugeldurchmesser <D21>, wird der Kompositträger 1 beim Gegeneinanderpressen der Fügepartner 101 und 102 komprimiert, und es kann Material vom Kompositträger 1 aus dem Fügespalt zwischen den Fügepartnern 101 und 102 austreten.

Unabhängig von der räumlichen Verteilung der Körner 2 auf dem Kompositträger 1 wurde als zweckmäße (d.h. für eine Kraftübertragung zwischen zwei Fügepartnern 101 und 102 optimale) Dicke d1 des unkomprimierten Kompositträgers 1 eine Dicke d1 im Bereich von 10 µm bis 100 µm ermittelt.

Beim Gegeneinanderpressen der Fügepartner 101 und 102 bei dazwischen befindlicher, reibwerterhöhender Einlage 3 wird der Kompositträger 1 komprimiert und verteilt sich im Fügespalt zwischen den Fügepartnern 101 und 102. Werden Betriebstemperaturen zwischen 250°C und 300°C erreicht, so zerfällt der Kunststoff 11 des Kompositträgers 1 unter anderem zu Kohlenstoff. Bei noch höheren Dauerbetriebstemperaturen von mehr als 350°C wird der Kunststoffträger 11 nahezu vollständig zersetzt. Zurück bleiben die im Fügespalt befindlichen harten Kerne 21, und gegebenenfalls Bestandteile des Haftvermittlers 22, insbesondere, wenn dieser metallisch ist, sowie winzige Reste des zersetzten Kunststoffträgers 11. Die harten Kerne 21 behalten auch bei wiederholter Demontage und Wiedermontage ihre Performance bei.

Bei Versuchen wurde ermittelt, dass sowohl bei Lastwechseln als auch bei Wiederholmontagen die Performance, d.h. der erzielte Reibwert zwischen den Fügepartnern 101 und 102, zunimmt. Bei einer solchen Wiederholmontage werden die Fügepartner 101 und 102 getrennt, wobei gegebenenfalls einige wenige harte Kerne 21 abfallen. Die restlichen harten Kerne 21 verbleiben jeweils an einem der Fügepartner 101 oder 102. Die Fügepartner 101 und 102 können dann wieder gefügt werden, und zwar ohne dass eine neue reibwerterhöhende Einlage 3 zwischen sie eingebracht wird. Der Kraftschluss zwischen den Fügepartnern 101 und 102 wird nämlich durch die Gesamtheit der an den Fügepartnern 101 und 102 verbliebenen harten Kerne 21 bewirkt.

Die deformierende Wirkung der harten Kerne 21 lässt sich nach der Erstmontage durch einen Trainiereffekt steigern. Dies rührt daher, dass beim ersten Fügen noch Setzkräfte beim Einpressen der harten Kerne 21 in die Fügepartner 101, 102 überwunden werden müssen. Bei weiteren Fügevorgängen verringern sich diese Setzkräfte dann. Infolge dynamischer Effekte findet außerdem eine verbesserte Verklammerung der harten Kerne 21 in den Fügeflächen 101f, 102f der Fügepartner 101, 102 statt. In Versuchen konnte nachgewiesen werden, dass sich gegenüber einer Einmalmontage durch einmalige Wiederholmontage bis zu 50% höhere Reibwerte erreichen lassen.

Weiterhin ist es für eine gute reibwerterhöhende Wirkung der Einlage 3 vorteilhaft, wenn die Flächenbelegung, mit der der Kompositträger 1 mit einen volumenäquivalenten Kugeldurchmesser D21 von wenigstens 8 µm aufweisenden harten Kernen 21 versehen ist, im Bereich von 5% bis 70% oder sogar im Bereich von 10% bis 40% liegt. Dies ist in Figur 8 am Beispiel einer reibwerterhöhenden Einlage 3 veranschaulicht, die - wie in den Figuren 4, 5 und 7 gezeigt - auf und/oder an genau einer ihrer beiden Hauptseiten 1t, 1b oder aber auf und/oder an beiden ihrer Hauptseiten 1t, 1b mit harten Kernen 21 versehen sind, die jeweils einen volumenäquivalenten Kugeldurchmesser D21 von wenigstens 8 µm aufweisen. Aus Gründen der Übersichtlichkeit ist der Haftvermittler 22, mittels dem die harten Kerne 21 an dem Kompositträger 1 befestigt sind, nicht dargestellt. Die an und/oder auf der ersten Hauptseite 1t befindlichen harten Kerne 21 sind anhand durchgezogener Linien dargestellt, die an und/oder auf der zweiten Hauptseite 1b befindlichen harten Kerne 21 sind anhand gestrichelter Linien dargestellt.

Der Kompositträger 1 liegt als im Wesentlichen ebene Schicht vor. Projiziert man die Außenkanten des Kompositträgers 1 mittels einer Orthogonalprojektion in einer senkrecht zu dieser ebenen Schicht verlaufenden Projektionsrichtung (in Figur 8 verläuft diese Projektionsrichtung senkrecht zur Zeichenebene) auf eine parallel zu dieser ebenen Schicht verlaufende Projektionsebene, so erhält man die Grundfläche A1 des Kompositträgers 1.

Projiziert man sämtliche harten Kerne 21 der Einlage 3, die einen volumenäquivalenten Kugeldurchmesser D21 von wenigstens 8 µm aufweisen, mit der vorangehend erläuterten Projektion auf die genannte Projektionsebene, so weisen diese eine Gesamt-Grundfläche A21_{GES} auf. Das heißt, A21_{GES} ist die Summe über die Grundflächen A21 aller harten Kerne 21, deren volumenäquivalenter Kugeldurchmesser D21 wenigstens 8 µm beträgt.

Das Verhältnis A21_{GES} ÷ A1 zwischen der Gesamt-Grundfläche A21_{GES} und der Grundfläche A1 des Kompositträgers 1 kann, wie bereits erwähnt, im Bereich von 0,05 (entsprechend einer Flächenbelegung von 5%) und 0,70 (entsprechend einer Flächenbelegung von 70%) liegen, und bevorzugt im Bereich von 0,10 (entsprechend einer Flächenbelegung von 10%) und 0,40 (entsprechend einer Flächenbelegung von 40%).

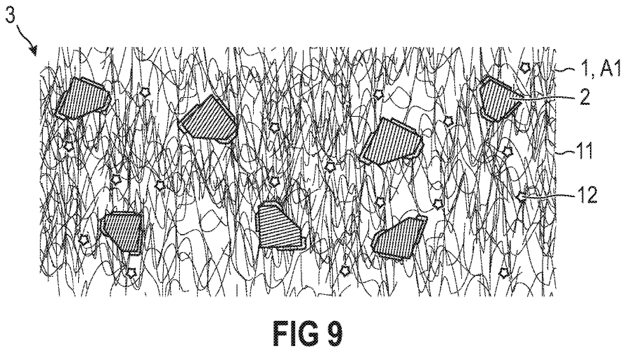

Wie den vorangehenden Figuren zu entnehmen ist, bilden die Körner 2 der Einlage 3 keine geschlossene Schicht. Optional kann eine reibwerterhöhende Einlage 3 so ausgebildet sein, dass die Haftvermittler 22 der verschiedenen Körner 2 keine durchgehende Schicht bilden. Vielmehr gilt zumindest für die Mehrzahl (d.h. > 50%) der einen volumenäquivalenten Kugeldurchmesser D21 von wenigstens 8 µm aufweisenden harten Kerne 21, dass die Bestandteile des Haftvermittlers 22, mittels dem die harten Kerne 21 jeweils an dem Kompositträger 1 befestigt sind, paarweise voneinander beabstandet sind, und zwar für beliebige Paare dieser Bestandteile des Haftvermittler. Dies ist beispielsweise in den Figuren 4, 5, 7 und 8 gezeigt, sowie in der weiteren, noch zu erläuternden Figur 9.

Figur 9 zeigt noch eine Draufsicht einer reibwerterhöhenden Einlage 3, bei der der Kunststoff 11 als Kunststoffträger 11 ausgebildet ist. In Figur 9 ist der Kunststoffträger als Vlies ausgebildet.

Nachfolgend werden noch drei Beispiele zur Herstellung einer reibwerterhöhenden Einlage 3 beschrieben.

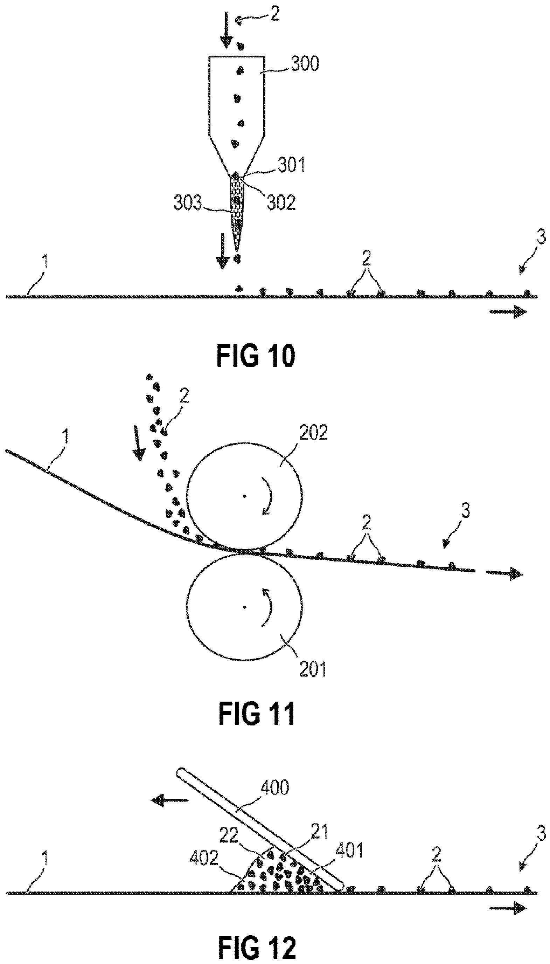

Gemäß einem ersten, in Figur 10 gezeigten Beispiel wird hierzu ein Plasma 303, beispielsweise ein Atmosphärendruckplasma, eingesetzt, das mittels einer Plasmaquelle 300 erzeugt wird. Die vollständig oder teilweise mit einem Haftvermittler 22 beschichteten harten Kerne 21, die fertig beschichtet gebrauchsfertig zugekauft werden können, werden in das Plasma 303 eingespeist, und/oder sie werden durch den Lichtbogen des Plasmas 303 hindurchgeleitet. Aufgrund der durch das Plasma 303 bzw. den Lichtbogen des Plasmas bewirkten thermischen Beaufschlagung wird der Haftvermittler 22 angeschmolzen. Im Fall des Plasmastrahls 303 zersputtern dessen Elektronen den Haftvermittler 22 und schmelzen ihn aufgrund der noch relativ hohen Temperatur des Plasmas 303, insbesondere der hohen Elektronentemperatur, an und/oder auf. Auch der Lichtbogen bewirkt ein An- und/oder Aufschmelzen des Haftvermittlers 22. Durch das An- und/oder Aufschmelzen wird der Haftvermittler 22 aktiviert.

Aufgrund des Energieverbrauchs für das An- und/oder Aufschmelzen und auf dem weiteren Weg der beschichteten harten Kerne 21 zusammen mit dem Plasma 303 zur Düsenöffnung 302 der Plasmaaustrittsdüse 301 kommt es zu einer Abkühlung, so dass die beschichteten harten Kerne 21 die Oberfläche des Kompositträgers 1 thermisch nicht schädigen. Der Kompositträger 1 kann, während die Körner 2 mit dem durch das Plasma 303 aktivierten Haftvermittler 22 auf ihn aufgebracht werden, relativ zur Plasmaquelle 300 bewegt werden. Anhand der Geschwindigkeit der Relativbewegung kann die Verteilung (Belegungsdichte), die die harten Kerne 21 auf dem fertigen Kompositträger 1 aufweisen, eingestellt werden.

Gemäß einem zweiten, anhand von Figur 11 erläuterten Verfahren werden die vollständig oder teilweise mit einem Haftvermittler 22 beschichteten harten Kerne 21 möglichst gleichmäßig verteilt auf den Kompositträger 1 gestreut. Mittels eines physikalischen Verfahrens wird der Haftvermittler 22 thermisch aktiviert, d.h. aufgeheizt und dadurch an- und optional auch aufgeschmolzen. Zum thermischen Aktivieren eines polymeren Haftvermittlers wird dieser auf Temperaturen von mindestens 60°C erwärmt, während ein metallischer Haftvermittler zu seiner thermischen Aktivierung auf Temperaturen von mindestens 200°C erwärmt wird.

Das Aufheizen und damit das Aktivieren des Haftvermittlers 22 kann jedoch auf prinzipiell beliebige Weise erfolgen, beispielsweise durch Kalandrieren, wie es in Figur 11 gezeigt ist. Hier werden die mit dem Haftvermittler 22 beschichteten harten Kerne 21, beispielsweise mittels (zumindest) einer beheizten Walze 201, 202 erwärmt und gegen den Kompositträger 1 gepresst. Durch das nachfolgende Abkühlen und Verfestigen des Haftvermittlers 22 werden die harten Kerne 21 durch den Haftvermittler 22 mit dem Kompositträger 1 im Fall eines metallischen Haftvermittlers 22 quasi "verlötet" oder "verbacken" (es liegt kein echter Lötprozess vor), oder im Fall eines aus einem Polymer oder einem organischen Materialien gebildeten Haftvermittler 22 "verklebt", und zwar nicht nur beim Kalandrieren, sondern auch bei allen anderen Verfahren, bei denen der Haftvermittler 22 thermisch aktiviert wird.

Ein polymerer Haftvermittler 22 kann, bevor die Körner 2 auf den Kompositträger 1 aufgebracht werden, anstelle oder zusätzlich zu einer thermischen Aktivierung auch chemisch aktiviert werden, so dass der Haftvermittler 22 funktionale Gruppen ausbildet, die die Entstehung von Adhäsionsbindungen zwischen dem Haftvermittler 22 und dem Kompositträger 1 und damit zwischen den harten Kernen 21 und dem Kompositträger 1 unterstützen.

Gemäß einem dritten, in Figur 12 gezeigten Verfahren wird eine Suspension 401, die den Haftvermittler 22, die harten Kerne 21 und ein den Haftvermittler 22 aktivierendes Lösemittel 402 enthält, mittels eines Rakels 400 auf den Kompositträger 1 aufgetragen, dadurch gleichmäßig über den Kompositträger 1 verteilt und danach durch Verdampfen des Lösemittels 402 getrocknet.

Unabhängig davon, mit welchem Verfahren die harten Kerne 21 auf den Kompositträger 1 aufgebracht und mit diesem verbunden werden, kann der mit den harten Kernen 21 homogen flächig belegte Kompositträger 1, d.h. die reibwerterhöhende Einlage 3, mittels mechanischer (z.B. Stanzen, Schneiden) oder thermischer (Laserschneiden) Verfahren konturgenau auf beliebige Formen zurechtgeschnitten bzw. -gestanzt und auf einen der Fügepartner 101 oder 102 gelegt werden, so dass diesem Fügepartner 101, 102 eine der Hauptseiten 1t, 2t des Kompositträgers 1 zugewandt ist. Dabei ist es, falls sich die Gesamtheit der harten Kerne 21 nur an und/oder auf einer der Hauptseiten 1t, 1b befindet, prinzipiell unerheblich, ob dem Fügepartner 101, 102, auf den die Einlage 3 aufgelegt wird, der Hauptseite 1t oder der Hauptseite 1b zugewandt ist. Beispielsweise kann die Einlage 3 auf einen der Fügepartner 101 oder 102 aufgelegt oder aufgeklebt werden. Falls sich die harten Kerne 21 nur an oder auf einer der Hauptseiten 1t, 1b des Kompositträgers 1 befinden (siehe zum Beispiel die Figuren 4 und 5) und falls die Einlage 3 auf einen der Fügepartner 101, 102 aufgeklebt wird, wird die Einlage 3 bevorzugt so auf dem betreffenden Fügepartner 101, 102 angeordnet, dass sich die harten Kerne 21 an und/oder auf der dem Kompositträger 1 abgewandten Seite dieses Fügepartners 101, 102 befinden, so dass der Kleber diesen Fügepartner 101, 102 und die diesem zugewandte (nicht mit harten Kernen 21 versehene) Seite der Einlage 3 kontaktiert. Dadurch wird vermieden, dass die harten Kerne 21 unmittelbar von dem Klebstoff überdeckt werden, da dies die Verbindung zwischen den vom Klebstoff überdeckten harten Kernen 21 und dem von der überdeckten Seite her ankommenden der Fügepartner 101 bzw. 102 schwächen würde. Um eine solche Schwächung zu vermeiden oder gering zu halten, ist es - unabhängig davon, in welcher Orientierung die Einlage 3 auf einen der Fügepartner 101, 102 aufgeklebt wird, vorteilhaft, wenn die Einlage 3 nur mit einzelnen kleinen Punktklebungen auf dem betreffenden Fügepartner 101 oder 102 fixiert wird.

Vorsorglich wird jedoch darauf hingewiesen, dass auf die Verwendung eines Klebers auch verzichtet werden kann, beispielsweise wenn die Einlage 3 lose (d.h. ohne dass sie mit zumindest einem der Fügepartner 101, 102 stoffschlüssig verbunden wird) zwischen die Fügepartner 101 und 102 eingebracht wird. Beispielsweise kann die Einlage 3 lose auf einen der Fügepartner 101 oder 102 aufgelegt oder zwischen diese gehalten und die Fügepartner 101 und 102 mit der zwischen ihnen befindlichen Einlage 3 wie beschrieben gegeneinander gepresst werden.

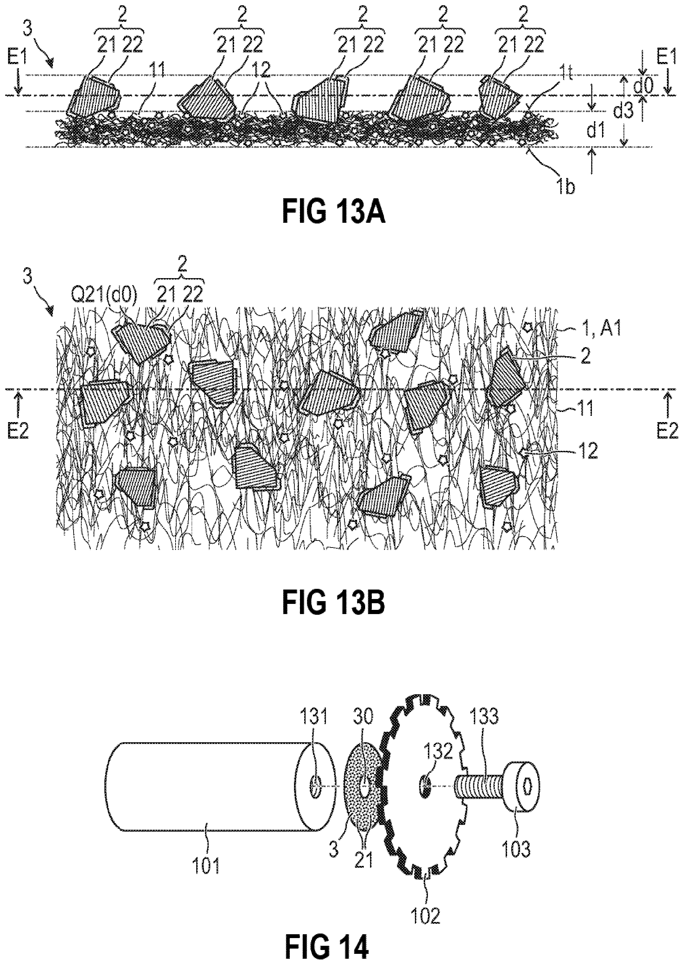

Nachfolgend wird unter Bezugnahme auf die Figuren 13A und 13B noch ein Verfahren erläutert, mit dem die bereits erläuterte Flächenbelegung des Kompositträgers 1 mit harten Kernen 21 in guter Näherung ermittelt werden kann. Figur 13A zeigt nochmals die bereits in Figur 4 dargestellte Einlage 3. Zusätzlich eingezeichnet ist eine Schnittebene E1-E1, die parallel zu der ebenen Einlage 3 durch zumindest einen der harten Kerne 21 verläuft und von dem Kompositträger 1 beabstandet ist. Die Schnittebene E1-E1 weist von dem oder den am weitesten von dem Kompositträger 1 beabstandeten Punkt(en) eines oder mehrerer der harten Kerne 21 bzw. der Körner 2 einen Abstand d0 auf. Der Abstand d0 bezieht sich quasi auf die "höchste Erhebung" bezogen auf die (hier erste) Hauptseite 1t des Kompositträgers 1. Die Schnittebene der Ansicht gemäß Figur 13A ist in Figur 13B mit E2-E2 bezeichnet.

Soweit die harten Kerne 21 von der Schnittebene E1-E1 geschnitten werden, weisen die harten Kerne 21 jeweils eine Querschnittsfläche Q21 auf, die von d0 abhängt und deshalb in Figur 13B für einen der harten Kerne 21 (oben links) mit Q21(d0) bezeichnet ist. Die Summe all dieser Querschnittsflächen Q21(d0) über die gesamte Einlage 3 wird nachfolgend mit Q21_{GES}(d0) bezeichnet. Sie hängt also vom Abstand d0 ab. Da die harten Kerne 21 im Wesentlichen auf dem Kompositträger 1 aufliegen (d.h. nicht oder kaum in diesen "eintauchen"), steigt Q21_{GES}(d0) ausgehend von d0=0 mit zunehmenden d0 zunächst an. Die dem Maximalwert von Q21_{GES}(d0) zugeordnete Schnittebene E1-E1 verläuft außerhalb (in Figur 13A oberhalb) des Kompositträgers 1.

Q21_{GES}(d0) kann nun dadurch ermittelt werden, dass die Einlage 3 optisch erfasst wird, so dass ihre Oberflächenkontur zumindest im Bereich außerhalb des Kompositträgers 1 mit großer Genauigkeit ermittelt und rechnergestützt ausgewertet werden kann. Damit kann der Abstand d0 variiert und die Querschnittsflächen der Körner 2 ermittelt werden. Da die Art und der Anteil des Haftvermittlers 22 bekannt ist, kann statistisch abgeschätzt werden, um wieviel die Querschnittsflächen der einzelnen Körner 2 zu reduzieren sind, um die zugehörigen Querschnittsflächen A21(d0) ihrer harten Kerne 21 zu erhalten. Auf diese Weise lässt sich auch der Wert von d0 ermitteln, bei dem Q21_{GES}(d0) seinen Maximalwert aufweist. Aus diesem Maximalwert wiederum kann auf die Flächenbelegung geschlossen werden, mit der eine der Hauptseiten 1t, 1b des Kompositträgers 1 mit harten Kernen 21 versehen ist. Außerdem kann aus dem Maximalwert auch auf die Größenverteilung der harten Kerne 21 geschlossen werden. Sofern beide Hauptseiten 1t, 1b mit harten Kernen 21 versehen sind, muss die erläuterte Untersuchung für jede der beiden Hauptseiten 1t, 1b durchgeführt werden. Aus den erzielten Werten lässt sich statistisch die Flächenbelegung abschätzen, mit der der Kompositträger 1 insgesamt mit harten Kernen 21 versehen ist. Dabei ist statistisch zu berücksichtigen, dass sich auf derselben Projektionsebene die Orthogonalprojektionen von harten Kernen 21, die sich auf unterschiedlichen Hauptseiten 1t und 1b des Kompositträgers 1 befinden, überlagern können.

Soweit es hier in der Projektionsebene zu Überschneidungen kommt, ist darauf zu achten, dass eventuelle Schnittflächen der Projektionsflächen verschiedener harter Kerne 21 nur einfach und nicht doppelt gezählt werden.

Figur 14 zeigt noch beispielhaft die Verwendung einer erfindungsgemäßen Einlage 3 anhand der Verbindung zwischen einem als Welle ausgebildeten ersten Fügepartner 101 und einem als Zahnrad ausgebildeten zweiten Fügepartner 102. Wie zu erkennen ist, kann eine Einlage 3 eine Durchgangsöffnung 30 aufweisen, durch die während der Montage eine Schraube 103 hindurchgeführt wird. Zur Montage wird die Einlage 3 zwischen die Fügepartner 101 und 102 eingebracht, wie dies bereits unter Bezugnahme insbesondere auf die Figuren 5 bis 7 erläutert wurde. Dabei wird die Einlage 3 so zwischen den Fügepartnern 101 und 102 angeordnet, dass ihre Durchgangsöffnung 30 mit einem Gewinde 131 des ersten Fügepartners 101 und einer Durchgangsöffnung 132 des zweiten Fügepartners 102 fluchtet und eine Schraube 103 mit ihrem Gewinde 133 durch die Durchgangsöffnungen 132 und 30 geführt und in das Gewinde 131 eingeschraubt werden kann, so dass die Fügepartner 101 und 102 mit der zwischen ihnen befindlichen Einlage 3 aneinandergepresst werden. Dabei wird von den harten Kernen 21 mehrheitlich jeweils ein Teil in den ersten Fügepartner 101 und ein anderer Teil in den zweiten Fügepartner 102 eingepresst, so dass diese jeweils in beide Fügepartner 101 und 102 eingreifenden harten Kerne 21 eine Kraftübertragung zwischen den Fügepartnern 101 und 102 bewirken. Dies hat zur Folge, dass eine aktive Drehung eines der Fügepartner 101 oder 102 um die (gestrichpunktet dargestellte) Achslinie dieses Fügepartners 101 oder 102 gedreht wird, der andere Fügepartner 102 bzw. 101 sicher mitgedreht wird.

Eine erfindungsgemäße Einlage 3 kann generell dazu verwendet werden, ein Drehmoment zwischen zwei Fügepartnern 101 und 102 zu übertragend und dabei die Fügepartner 101 und 102 gegen ein unbeabsichtigtes Verdrehen gegeneinander zu sichern. Generell kann eine erfindungsgemäße Einlage 3 dazu verwendet werden, eine relative Gleitbewegung zwischen zwei Fügepartnern 101 und 102 zu verhindern, wenn zwischen den Fügepartnern 101 und 102 eine Kraft und/oder ein Drehmoment übertragen wird.

Eine reibwerterhöhende Einlage 3, wie sie vorangehend beschrieben wurde, weist eine Reihe von Vorteilen auf:
Erstens eignet sie sich für die Verwendung in Verbindung mit Fügepartnern 101, 102, die, beispielsweise aufgrund von Bauteilabmessungen, Zugänglichkeit, Restschmutzanforderung, Handlings- und Logistikaufwendungen und Ähnliches für eine direkte Beschichtung mit harten Kernen 21 nicht in Frage kommen.

Zweitens tragen die einen volumenäquivalenten Kugeldurchmesser D21 von wenigstens 8 µm aufweisenden harten Kerne 21 im Wesentlichen vollständig zum Kraftschluss zwischen den Fügepartnern 101 und 102 bei, da sie nahezu mit ihrem gesamten Volumen im Eingriff mit den Fügepartnern 101 und 102 stehen. Hierdurch lassen sich bei Fügepartnern 101 und 102 aus Stahl oder anderen Metallen Erhöhungen des Reibungskoeffizienten µ bis auf das 6-fache des Reibungskoeffizienten erzielen, den die betreffenden Metalle bei direktem flächigem Kontakt ohne die harten Kerne 21 aufweisen würden (ebene Kontaktflächen der Metalle bei direktem flächigen Kontakt vorausgesetzt). Die erzielte Performance ist ähnlich einem herkömmlichen Verfahren, bei dem Körner oder harte Kerne direkt auf einen oder beide Fügepartner 101, 102 aufgebracht werden.

Drittens ist die reibwerterhöhende Einlage 3 aufgrund des Einsatzes von standardisierten Serienverarbeitungsprozessen wirtschaftlich herstellbar. Dies gilt sowohl für die Herstellung des Kunststoffträgers 11, als auch das Verbinden der Partikel 12 mit dem Kunststoffträger 11, als auch für das Verbinden der harten Kerne 21 mit dem Kompositträger 1.

Viertens ist die reibwerterhöhende Einlage 3 leicht auch an kompliziert geformte oder nicht ebene Fügeflächen der Fügepartner 101, 102 anzupassen, und zwar auch in 3D (drei Dimensionen).

Fünftens ist, anders als bei vielen herkömmlichen Verfahren, keine maßliche Berücksichtigung bei der konstruktiven Auslegung der zur Herstellung des betreffenden Pressverbands verwendeten Fügepartner 101 und 102 erforderlich, da die Fügung quasi auf Nullspalt erfolgt.

Sechstens kann die reibwerterhöhende Einlage 3 mit Hilfe von Klebepunkten auf der Fügefläche eines der Fügepartner 101 oder 102 fixiert werden, bevor die Fügepartner 101 und 102 mit dazwischen befindlicher Einlage 3 gegeneinander gepresst werden.

Siebtens lassen sich durch die Verwendung inerter Materialien sowohl für die harten Kerne 21 als auch des Kompositträgers 1 die Gefahr von Passungsrost bzw. elektrochemischer Korrosion vermeiden oder zumindest vermindern.

Achtens hat die räumliche Orientierung der harten Kerne 21 auf den Fügepartnern 101, 102 keine Auswirkungen auf die erzielbare Reibwerterhöhung.

Eine reibwerterhöhende Einlage 3 lässt sich in Verbindung mit nahezu beliebigen kraftschlüssigen Verbindungen verwenden, beispielsweise bei Flanschverbindungen, bei Stirnpressverbänden, bei Schraubverbindungen, bei Befestigungssystemen, bei Welle-Nabe-Verbindungen.

Einige Aspekte der Erfindung werden nachfolgend nochmals überblicksartig zusammengefasst:
Ein erster Aspekt betrifft eine reibwerterhöhende Einlage (3). Diese weist auf: einen Kompositträger (1) mit Kunststoff (11) sowie mit Glas und/oder Keramik, und eine Vielzahl von harten Kernen (21), von denen jeder einen volumenäquivalenten Kugeldurchmesser (D21) von wenigstens 8 µm besitzt und mittels eines Haftvermittlers (22) mit dem Kompositträger (1) verbunden ist. Der unkomprimierte Kompositträger (1) weist eine Dicke (d1) im Bereich von 10 µm bis 100 µm auf und/oder die reibwerterhöhende Einlage (3) weist bei unkomprimiertem Kompositträger (1) eine Dicke (d3) von kleiner oder gleich 420 µm auf.

Gemäß einem zweiten Aspekt, der eine reibwerterhöhende Einlage (3) gemäß dem ersten Aspekt betrifft, ist der Mittelwert (<D21>) der volumenäquivalenten Kugeldurchmesser (D21) der Gesamtheit der harten Kerne (21) der Einlage (3), die einen volumenäquivalenten Kugeldurchmesser (D21) von wenigstens 8 µm aufweisen, größer als die Dicke (d1) des unkomprimierten Kompositträgers (1).

Gemäß einem dritten Aspekt, der eine reibwerterhöhende Einlage (3) gemäß dem zweiten Aspekt betrifft, weisen die volumenäquivalenten Kugeldurchmesser (D21) der Gesamtheit der harten Kerne (21) der Einlage (3), die einen volumenäquivalenten Kugeldurchmesser (D21) von wenigstens 8 µm aufweisen, einen Mittelwert (<D21>) auf. Von der Gesamtheit der harten Kerne (21), die einen volumenäquivalenten Kugeldurchmesser (D21) von wenigstens 8 µm aufweisen, weisen höchstens 10% einen volumenäquivalenten Kugeldurchmesser (D21) auf, der um mehr als 5 µm kleiner ist, als der Mittelwert (<D21>), und höchstens 10% weisen einen volumenäquivalenten Kugeldurchmesser (D21) auf, der um mehr als 5 µm größer ist, als der Mittelwert (<D21>).

Gemäß einem vierten Aspekt liegt bei einer reibwerterhöhende Einlage (3) gemäß einem der Aspekte eins bis drei der Mittelwert (<D21>) der volumenäquivalenten Kugeldurchmesser (D21) der Gesamtheit der harten Kerne (21) der Einlage (3), die einen volumenäquivalenten Kugeldurchmesser (D21) von wenigstens 8 µm aufweisen, im Bereich von 8 µm bis 150 µm, vorzugsweise im Bereich von 15 µm bis 100 µm.

Gemäß einem fünften Aspekt bilden bei einer reibwerterhöhende Einlage (3) gemäß einem der Aspekte eins bis vier von der Gesamtheit der harten Kerne (21) der Einlage, die einen volumenäquivalenten Kugeldurchmesser (D21) von wenigstens 8 µm aufweisen, diejenigen, die einen volumenäquivalenten Kugeldurchmesser (D21) von kleiner als 35 µm aufweisen, eine erste Teilmenge, und diejenigen, die einen volumenäquivalenten Kugeldurchmesser (D21) von größer oder gleich 35 µm aufweisen, bilden eine zweite Teilmenge. Die harten Kerne (21) der ersten Teilmenge weisen einen ersten mittleren volumenäquivalenten Kugeldurchmesser im Bereich von 10 µm bis 30 µm auf, und die harten Kerne (21) der zweiten Teilmenge weisen einen zweiten mittleren volumenäquivalenten Kugeldurchmesser im Bereich von mehr als 30 µm bis 145 µm auf.

Gemäß einem sechsten Aspekt weisen bei einer reibwerterhöhende Einlage (3) gemäß einem der Aspekte eins bis fünf die harten Kerne (21) jeweils eine Mohs-Härte von wenigstens 8 auf.

Gemäß einem siebten Aspekt bestehen bei einer reibwerterhöhende Einlage (3) gemäß einem der Aspekte eins bis sechs die harten Kerne (21) aus einem der folgenden Materialen oder sie weisen zumindest eines der folgenden Materialien auf: Diamant; ein Carbid; ein Nitrid; ein Borid; ein Oxid.

Gemäß einem achten Aspekt besteht bei einer reibwerterhöhende Einlage (3) gemäß einem der Aspekte eins bis sieben der Haftvermittler (22) aus einem der folgenden Materialen oder er weist zumindest eines der folgenden Materialien auf: ein Metall; eine Legierung; einen Kunststoff; ein organisches Material.

Gemäß einem neunten Aspekt weist der Kompositträger einer reibwerterhöhende Einlage (3) gemäß einem der Aspekte eins bis acht eine erste Hauptseite (1t) und eine der ersten Hauptseite (1t) entgegengesetzte zweite Hauptseite (1b) auf, und die Gesamtheit der harten Kerne (21) nur an und/oder auf der ersten Hauptseite (1t) angeordnet, nicht aber an oder auf der zweiten Hauptseite (1b).

Gemäß einem zehnten Aspekt weist der Kompositträger einer reibwerterhöhende Einlage (3) gemäß einem der Aspekte eins bis acht eine erste Hauptseite (1t) und eine der ersten Hauptseite (1t) entgegengesetzte zweite Hauptseite (1b) auf, und die Gesamtheit der harten Kerne (21) sowohl an oder auf der ersten Hauptseite (1t) angeordnet als auch an oder auf der zweiten Hauptseite (1b) angeordnet.

Gemäß einem elften Aspekt ist bei einer reibwerterhöhende Einlage (3) gemäß einem der Aspekte eins bis zehn der Kunststoff (11) als Kunststoffträger ausgebildet. Außerdem besteht er aus Vlies oder er weist ein Vlies auf.

Gemäß einem zwölften Aspekt macht bei einer reibwerterhöhende Einlage (3) gemäß einem der Aspekte eins bis elf die Flächenbelegung, mit der der Kompositträger (1) mit den harten Kernen (21) belegt ist, deren volumenäquivalenter Kugeldurchmesser (D21) wenigstens 8 µm beträgt, 5% bis 70% der Grundfläche (A1) des Kompositträgers (1) aus.

Gemäß einem dreizehnten Aspekt gilt bei einer reibwerterhöhende Einlage (3) gemäß einem der Aspekte eins bis zwölf für eine Mehrzahl der harten Kerne (21), die einen volumenäquivalenten Kugeldurchmesser (D21) von wenigstens 8 µm aufweisen, dass die Haftvermittler (22), mittels denen die harten Kerne (21) dieser Mehrzahl mit dem Kompositträger (1) verbunden sind, keine durchgehende Schicht bilden, sondern, für beliebige Paare von harten Kernen (21) dieser Mehrzahl, paarweise voneinander beabstandet sind.

Ein vierzehnter Aspekt betrifft ein Verfahren, mit dem eine reibwerterhöhende Einlage (3) hergestellt wird, die gemäß einem der Aspekte eins bis dreizehn ausgebildet ist. Bei dem Verfahren wird ein Kompositträger (1) bereitgestellt, der Kunststoff (11) aufweist, sowie zumindest eines von Glas und Keramik (12). Ebenfalls bereitgestellt wird eine Vielzahl von harten Kernen (21), von denen jeder einen volumenäquivalenten Kugeldurchmesser (D21) von wenigstens 8 µm aufweist. Die harten Kerne (21) werden auf den Kompositträger (1) aufgebracht und mittels eines thermisch und/oder chemisch aktivierten Haftvermittlers (22) stoffschlüssig mit dem Kompositträger (1) verbunden.

Bei einem Verfahren gemäß einem fünfzehnten Aspekt wird bei einem Verfahren gemäß dem vierzehnten Aspekt der Haftvermittler (22) durch Erwärmung auf Temperaturen von wenigstens 60°C thermisch aktiviert.

Bei einem Verfahren gemäß einem sechzehnten Aspekt wird bei einem Verfahren gemäß dem vierzehnten oder dem fünfzehnten Aspekt der Haftvermittler (22) thermisch aktiviert, indem die mit dem Haftvermittler (22) vorbeschichteten harten Kerne (21) einem thermischen Plasma (303) und/oder einem Plasmalichtbogen (303) ausgesetzt werden.

Bei einem Verfahren gemäß einem siebzehnten Aspekt wird bei einem Verfahren gemäß dem vierzehnten oder dem fünfzehnten Aspekt der Haftvermittler (22) thermisch aktiviert, indem die harten Kerne (1) mit dem Haftvermittler (22) vorbeschichtet werden, so dass eine Vielzahl von Körnern (2) vorliegt, von denen jedes einen der mit dem Haftvermittler (22) vorbeschichteten harten Kerne (21) aufweist; und indem die Körner (2) mittels einer beheizten Walze (201, 202) erwärmt und gegen den Kompositträger (1) gepresst werden, wobei der Haftvermittler (22) thermisch aktiviert wird.

Bei einem Verfahren gemäß einem achtzehnten Aspekt wird bei einem Verfahren gemäß einem der Aspekte vierzehn bis sechzehn eine Suspension (401), die den Haftvermittler (22), die harten Kerne (21) und ein den Haftvermittler (22) aktivierendes Lösemittel (402) enthält, mittels eines Rakels (400) auf den Kompositträger (1) aufgetragen und danach getrocknet.

Bei einem Verfahren gemäß einem neunzehnten Aspekt macht bei einem Verfahren gemäß einem der Aspekte vierzehn bis achtzehn bei einem jeden der bereitgestellten Körner (2) der Haftvermittler (22), mit dem das betreffende Korn (2) beschichtet ist, einen Gewichtsanteil am Gewicht des betreffenden Korns (2) aus, wobei der Mittelwert dieser Gewichtsanteile im Bereich von 5 Gew.% bis 80 Gew.% liegt, im Fall eines metallischen Haftvermittlers (22) bevorzugt im Bereich von 30 Gew% und 70 Gew%, und im Fall eines Haftvermittlers (22) aus Kunststoff bevorzugt im Bereich von 5 Gew% und 50 Gew%.

Ein zwanzigster Aspekt betrifft ein Verfahren zur Herstellung eines Pressverbands zwischen einem ersten Fügepartner (101) einem zweiten Fügepartner (102). Hierzu werden der erste Fügepartner (101) und der zweite Fügepartner (102), während zwischen ihnen eine reibwerterhöhende Einlage (3) angeordnet ist, die gemäß einem der Aspekte eins bis dreizehn ausgebildet ist und/oder gemäß einem der Aspekte vierzehn bis neunzehn hergestellt wurde, so gegeneinander gepresst, dass von einer Mehrzahl der harten Kerne (21) jeder jeweils teilweise sowohl in den ersten Fügepartner (101) als auch in den zweiten Fügepartner (102) eingepresst wird.

## Patentansprüche

1. Reibwerterhöhende Einlage, die aufweist:
einen komprimierbaren Kompositträger (1), der aufweist:
Glas und/oder Keramik (12); sowie
einen als Vlies ausgebildeten Kunststoffträger (11); und
eine Vielzahl von harten Kernen (21), von denen jeder
- einen volumenäquivalenten Kugeldurchmesser (D21) von wenigstens 8 µm besitzt; und
- mittels eines Haftvermittlers (22) mit dem Kompositträger (1) verbunden ist; und
wobei der unkomprimierte Kompositträger (1) eine Dicke (d1) im Bereich von 10 µm bis 100 µm aufweist; und/oder die reibwerterhöhende Einlage (3) bei unkomprimiertem Kompositträger (1) eine Dicke (d3) von kleiner oder gleich 420 µm aufweist.

2. Reibwerterhöhende Einlage nach Anspruch 1, bei der der arithmetische Mittelwert (<D21>) der volumenäquivalenten Kugeldurchmesser (D21) der Gesamtheit der harten Kerne (21) der Einlage (3), die einen volumenäquivalenten Kugeldurchmesser (D21) von wenigstens 8 µm aufweisen, größer ist, als die Dicke (d1) des unkomprimierten Kompositträgers (1).

3. Reibwerterhöhende Einlage nach Anspruch 2, bei der
die volumenäquivalenten Kugeldurchmesser (D21) der Gesamtheit der harten Kerne (21) der Einlage (3), die einen volumenäquivalenten Kugeldurchmesser (D21) von wenigstens 8 µm aufweisen, einen arithmetischen Mittelwert (<D21>) aufweisen; von der Gesamtheit der harten Kerne (21), die einen volumenäquivalenten Kugeldurchmesser (D21) von wenigstens 8 µm aufweisen
- höchstens 10% einen volumenäquivalenten Kugeldurchmesser (D21) aufweisen, der um mehr als 5 µm kleiner ist, als der arithmetische Mittelwert (<D21>); und
- höchstens 10% einen volumenäquivalenten Kugeldurchmesser (D21) aufweisen, der um mehr als 5 µm größer ist, als der arithmetische Mittelwert (<D21>).

4. Reibwerterhöhende Einlage nach Anspruch 1, bei der der arithmetische Mittelwert (<D21>) der volumenäquivalenten Kugeldurchmesser (D21) der Gesamtheit der harten Kerne (21) der Einlage (3), die einen volumenäquivalenten Kugeldurchmesser (D21) von wenigstens 8 µm aufweisen, im Bereich von 8 µm bis 150 µm, vorzugsweise im Bereich von 15 µm bis 100 µm liegt.

5. Reibwerterhöhende Einlage nach Anspruch 1, bei der von der Gesamtheit der harten Kerne (21) der Einlage, die einen volumenäquivalenten Kugeldurchmesser (D21) von wenigstens 8 µm aufweisen,
diejenigen, die einen volumenäquivalenten Kugeldurchmesser (D21) von kleiner als 35 µm aufweisen, eine erste Teilmenge bilden;
diejenigen, die einen volumenäquivalenten Kugeldurchmesser (D21) von größer oder gleich 35 µm aufweisen, eine zweite Teilmenge bilden;
die harten Kerne (21) der ersten Teilmenge einen ersten mittleren volumenäquivalenten Kugeldurchmesser im Bereich von 10 µm bis 30 µm aufweisen; und
die harten Kerne (21) der zweiten Teilmenge einen zweiten mittleren volumenäquivalenten Kugeldurchmesser im Bereich von mehr als 30 µm bis 145 µm aufweisen.

6. Reibwerterhöhende Einlage nach Anspruch 1, bei der die harten Kerne (21) jeweils eine Mohs-Härte von wenigstens 8 aufweisen.

7. Reibwerterhöhende Einlage nach Anspruch 1, bei der der Haftvermittler (22) aus einem der folgenden Materialen besteht oder zumindest eines der folgenden Materialien aufweist: ein Metall; eine Legierung; einen Kunststoff; ein organisches Material.

8. Reibwerterhöhende Einlage nach Anspruch 1, bei der der Kompositträger (1) eine erste Hauptseite (1t) und eine der ersten Hauptseite (1t) entgegengesetzte zweite Hauptseite (1b) aufweist, wobei die Gesamtheit der harten Kerne (21) nur an und/oder auf der ersten Hauptseite (1t) angeordnet sind, nicht aber an oder auf der zweiten Hauptseite (1b).

9. Reibwerterhöhende Einlage nach Anspruch 1, bei der der Kompositträger (1) eine erste Hauptseite (1t) und eine der ersten Hauptseite (1t) entgegengesetzte zweite Hauptseite (1b) aufweist, wobei die Gesamtheit der harten Kerne (21) sowohl an oder auf der ersten Hauptseite (1t) angeordnet als auch an oder auf der zweiten Hauptseite (1b) angeordnet ist.

10. Reibwerterhöhende Einlage nach Anspruch 1, bei der die Flächenbelegung, mit der der Kompositträger (1) mit den harten Kernen (21) belegt ist, deren volumenäquivalenter Kugeldurchmesser (D21) wenigstens 8 µm beträgt, 5% bis 70% der Grundfläche (A1) des Kompositträgers (1) ausmacht.

11. Reibwerterhöhende Einlage nach Anspruch 1, bei der für eine Mehrzahl der harten Kerne (21), die einen volumenäquivalenten Kugeldurchmesser (D21) von wenigstens 8 µm aufweisen, gilt, dass die Haftvermittler (22), mittels denen die harten Kerne (21) dieser Mehrzahl mit dem Kompositträger (1) verbunden sind, keine durchgehende Schicht bilden, sondern, für beliebige Paare von harten Kernen (21) dieser Mehrzahl, paarweise voneinander beabstandet sind.

12. Verfahren, mit dem eine reibwerterhöhende Einlage (3) mit einem komprimierbaren Kompositträger (1) hergestellt wird, der aufweist:
Glas und/oder Keramik (12); sowie
einen als Vlies ausgebildeten Kunststoffträger (11); und
eine Vielzahl von harten Kernen (21), von denen jeder
- einen volumenäquivalenten Kugeldurchmesser (D21) von wenigstens 8 µm besitzt; und
- mittels eines Haftvermittlers (22) mit dem Kompositträger (1) verbunden ist; und
wobei der unkomprimierte Kompositträger (1) eine Dicke (d1) im Bereich von 10 µm bis 100 µm aufweist; und/oder die reibwerterhöhende Einlage (3) bei unkomprimiertem Kompositträger (1) eine Dicke (d3) von kleiner oder gleich 420 µm aufweist;
wobei das Verfahren die Schritte aufweist:
Bereitstellen eines Kompositträgers (1), der aufweist:
Glas und/oder Keramik (12); sowie
Kunststoff (11);
Bereitstellen einer Vielzahl von harten Kernen (21), von denen jeder einen volumenäquivalenten Kugeldurchmesser (D21) von wenigstens 8 µm aufweist;
Aufbringen der harten Kerne (21) auf den Kompositträger (1); und
stoffschlüssiges Verbinden der harten Kerne (21) mit dem Kompositträger (1) mittels eines thermisch und/oder chemisch aktivierten Haftvermittlers (22).

13. Reibwerterhöhende Einlage gemäß einem der vorangehenden Ansprüche, bei der der Kompositträger (1) eine Porosität von wenigstens 15%, insbesondere zwischen 30% und 70%, aufweist.

14. Verfahren nach Anspruch 12, bei dem jeder der harten Kerne (21) mit dem Haftvermittler (22) beschichtet ist und mit diesem ein Korn (2) bildet, wobei bei einem jeden der Körner (2) der Haftvermittler (22), mit dem das betreffende Korn (2) beschichtet ist, einen Gewichtsanteil am Gewicht des betreffenden Korns (2) ausmacht, wobei der arithmetische Mittelwert dieser Gewichtsanteile im Bereich von 5 Gew.% bis 80 Gew.% liegt, im Fall eines metallischen Haftvermittlers (22) bevorzugt im Bereich von 30 Gew% und 70 Gew%, im Fall eines Haftvermittlers (22) aus Kunststoff bevorzugt im Bereich von 5 Gew% und 50 Gew%.

15. Verfahren zur Herstellung eines Pressverbands zwischen einem ersten Fügepartner (101) einem zweiten Fügepartner (102) unter Verwendung einer reibwerterhöhenden Einlage (3), die aufweist:
Glas und/oder Keramik (12); sowie
einen als Vlies ausgebildeten Kunststoffträger (11); und
eine Vielzahl von harten Kernen (21), von denen jeder
- einen volumenäquivalenten Kugeldurchmesser (D21) von wenigstens 8 µm besitzt; und
- mittels eines Haftvermittlers (22) mit einem komprimierbaren Kompositträger (1) verbunden ist; und
wobei der unkomprimierte Kompositträger (1) eine Dicke (d1) im Bereich von 10 µm bis 100 µm aufweist; und/oder die reibwerterhöhende Einlage (3) bei unkomprimiertem Kompositträger (1) eine Dicke (d3) von kleiner oder gleich 420 µm aufweist; und
wobei bei dem Verfahren der erste Fügepartner (101) und der zweite Fügepartner (102), während die reibwerterhöhende Einlage (3) zwischen ihnen angeordnet ist, so gegeneinander gepresst werden, dass von einer Mehrzahl der harten Kerne (21) jeder jeweils teilweise sowohl in den ersten Fügepartner (101) als auch in den zweiten Fügepartner (102) eingepresst wird.

## Claims

1. Insert which increases the coefficient of friction, having:
a compressible composite support (1), which comprises:
glass and/or ceramic (12); and also
a plastic support (11) in the form of a nonwoven; and
a multiplicity of hard cores (21), each of which
- has a volume-equivalent sphere diameter (D21) of at least 8 µm; and
- is bonded to the composite support (1) by means of an adhesion promoter (22); and
wherein the uncompressed composite support (1) has a thickness (d1) in the range from 10 µm to 100 µm; and/or the insert (3) which increases the coefficient of friction has a thickness (d3) of less than or equal to 420 µm when the uncompressed composite support (1) is uncompressed.

2. Insert which increases the coefficient of friction according to Claim 1, in which the arithmetic mean value (<D21>) of the volume-equivalent sphere diameters (D21) of the entirety of the hard cores (21) of the insert (3) that have a volume-equivalent sphere diameter (D21) of at least 8 µm is greater than the thickness (d1) of the uncompressed composite support (1).

3. Insert which increases the coefficient of friction according to Claim 2, in which
the volume-equivalent sphere diameters (D21) of the entirety of the hard cores (21) of the insert (3) that have a volume-equivalent sphere diameter (D21) of at least 8 µm have an arithmetic mean value (<D21>); of the entirety of the hard cores (21) that have a volume-equivalent sphere diameter (D21) of at least 8 µm,
- at most 10% have a volume-equivalent sphere diameter (D21) which is less than the arithmetic mean value (<D21>) by more than 5 µm; and
- at most 10% have a volume-equivalent sphere diameter (D21) which is greater than the arithmetic mean value (<D21>) by more than 5 µm.

4. Insert which increases the coefficient of friction according to Claim 1, in which the arithmetic mean value (<D21>) of the volume-equivalent sphere diameters (D21) of the entirety of the hard cores (21) of the insert (3) that have a volume-equivalent sphere diameter (D21) of at least 8 µm is in the range from 8 µm to 150 µm, preferably in the range from 15 µm to 100 µm.

5. Insert which increases the coefficient of friction according to Claim 1, in which, of the entirety of the hard cores (21) of the insert that have a volume-equivalent sphere diameter (D21) of at least 8 µm,
those that have a volume-equivalent sphere diameter (D21) of less than 35 µm form a first partial quantity;
those that have a volume-equivalent sphere diameter (D21) of greater than or equal to 35 µm form a second partial quantity;
the hard cores (21) of the first partial quantity have a first mean volume-equivalent sphere diameter in the range from 10 µm to 30 µm; and
the hard cores (21) of the second partial quantity have a second mean volume-equivalent sphere diameter in the range from more than 30 µm to 145 µm.

6. Insert which increases the coefficient of friction according to Claim 1, in which the hard cores (21) have a Mohs hardness of at least 8 in each case.

7. Insert which increases the coefficient of friction according to Claim 1, in which the adhesion promoter (22) consists of one of the following materials or comprises at least one of the following materials: a metal; an alloy; a plastic; an organic material.

8. Insert which increases the coefficient of friction according to Claim 1, in which the composite support (1) has a first main side (1t) and a second main side (1b) opposite the first main side (1t), wherein the entirety of the hard cores (21) are arranged only at and/or on the first main side (1t), but not at or on the second main side (1b).

9. Insert which increases the coefficient of friction according to Claim 1, in which the composite support (1) has a first main side (1t) and a second main side (1b) opposite the first main side (1t), wherein the entirety of the hard cores (21) are arranged both at or on the first main side (1t) and at or on the second main side (1b) .

10. Insert which increases the coefficient of friction according to Claim 1, in which the surface coverage with which the composite support (1) is covered by the hard cores (21), the volume-equivalent sphere diameters (D21) of which amount to at least 8 µm, makes up 5% to 70% of the base area (A1) of the composite support (1).

11. Insert which increases the coefficient of friction according to Claim 1, in which, for a plurality of the hard cores (21) which have a volume-equivalent sphere diameter (D21) of at least 8 µm, it holds true that the adhesion promoters (22) which bond the hard cores (21) of this plurality to the composite support (1) do not form a continuous layer, but rather, for any pair of hard cores (21) of this plurality, are spaced apart from one another in pairs.

12. Method with which an insert (3) which increases the coefficient of friction and has a compressible composite support (1) is produced, which comprises:
glass and/or ceramic (12); and also
a plastic support (11) in the form of a nonwoven; and
a multiplicity of hard cores (21), each of which
- has a volume-equivalent sphere diameter (D21) of at least 8 µm; and
- is bonded to the composite support (1) by means of an adhesion promoter (22); and
wherein the uncompressed composite support (1) has a thickness (d1) in the range from 10 µm to 100 µm; and/or the insert (3) which increases the coefficient of friction has a thickness (d3) of less than or equal to 420 µm when the composite support (1) is uncompressed;
wherein the method comprises the steps of:
providing a composite support (1), which comprises:
glass and/or ceramic (12); and also
plastic (11);
providing a multiplicity of hard cores (21), each of which has a volume-equivalent sphere diameter (D21) of at least 8 µm;
applying the hard cores (21) to the composite support (1); and
materially bonding the hard cores (21) to the composite support (1) by means of a thermally and/or chemically activated adhesion promoter (22).

13. Insert which increases the coefficient of friction according to one of the preceding claims, in which the composite support (1) has a porosity of at least 15%, in particular between 30% and 70%.

14. Method according to Claim 12, in which each of the hard cores (21) is coated with the adhesion promoter (22) and forms a grain (2) therewith, wherein, for each of the grains (2), the adhesion promoter (22) with which the grain (2) in question is coated makes up a proportion by weight of the weight of the grain (2) in question, wherein the arithmetic mean value of this proportion by weight is in the range from 5% by weight to 80% by weight, in the case of a metallic adhesion promoter (22) preferably in the range from 30% by weight and 70% by weight, in the case of an adhesion promoter (22) composed of plastic preferably in the range from 5% by weight and 50% by weight.

15. Method for producing an interference fit between a first part (101) to be joined and a second part (102) to be joined using an insert (3) which increases the coefficient of friction, which insert comprises:
glass and/or ceramic (12); and also
a plastic support (11) in the form of a nonwoven; and
a multiplicity of hard cores (21), each of which
- has a volume-equivalent sphere diameter (D21) of at least 8 µm; and
- is bonded to a compressible composite support (1) by means of an adhesion promoter (22); and
wherein the uncompressed composite support (1) has a thickness (d1) in the range from 10 µm to 100 µm; and/or the insert (3) which increases the coefficient of friction has a thickness (d3) of less than or equal to 420 µm when the composite support (1) is uncompressed; and
wherein, in the method, the first part (101) to be joined and the second part (102) to be joined, with the insert (3) which increases the coefficient of friction arranged between them, are pressed against one another such that, of a plurality of the hard cores (21), each is pressed respectively partially both into the first part (101) to be joined and into the second part (102) to be joined.

## Revendications

1. Insert augmentant le coefficient de frottement, qui comprend :
un support composite comprimable (1), qui comprend :
du verre et/ou de la céramique (12) ; ainsi que
un support en matière plastique configuré sous la forme d'un non-tissé (11) ; et
une pluralité de noyaux durs (21), parmi lesquels chacun
- présente un diamètre de sphère à volume équivalent (D21) d'au moins 8 µm ; et
- est relié au moyen d'un promoteur d'adhésion (22) avec le support composite (1) ; et
dans lequel le support composite non comprimé (1) présente une épaisseur (d1) dans la plage allant de 10 µm à 100 µm ; et/ou l'insert augmentant le coefficient de frottement (3) présente lorsque le support composite (1) est non comprimé une épaisseur (d3) inférieure ou égale à 420 µm.

2. Insert augmentant le coefficient de frottement selon la revendication 1, dans lequel la valeur de moyenne arithmétique (<D21>) des diamètres de sphère à volume équivalent (D21) de la totalité des noyaux durs (21) de l'insert (3), qui présentent un diamètre de sphère à volume équivalent (D21) d'au moins 8 µm, est supérieure à l'épaisseur (d1) du support composite non comprimé (1).

3. Insert augmentant le coefficient de frottement selon la revendication 2, dans lequel les diamètres de sphère à volume équivalent (D21) de la totalité des noyaux durs (21) de l'insert (3), qui présentent un diamètre de sphère à volume équivalent (D21) d'au moins 8 µm, présentent une valeur de moyenne arithmétique (<D21>) ; parmi la totalité des noyaux durs (21), qui présentent un diamètre de sphère à volume équivalent (D21) d'au moins 8 µm,
- au plus 10 % présentent un diamètre de sphère à volume équivalent (D21) qui est inférieur de plus de 5 µm à la valeur de moyenne arithmétique (<D21>) ; et
- au plus 10 % présentent un diamètre de sphère à volume équivalent (D21) qui est supérieur de plus de 5 µm à la valeur de moyenne arithmétique (<D21>).

4. Insert augmentant le coefficient de frottement selon la revendication 1, dans lequel la valeur de moyenne arithmétique (<D21>) des diamètres de sphère à volume équivalent (D21) de la totalité des noyaux durs (21) de l'insert (3), qui présentent un diamètre de sphère à volume équivalent (D21) d'au moins 8 µm, se situe dans la plage allant de 8 µm à 150 µm, de préférence dans la plage allant de 15 µm à 100 µm.

5. Insert augmentant le coefficient de frottement selon la revendication 1, dans lequel, parmi la totalité des noyaux durs (21) de l'insert, qui présentent un diamètre de sphère à volume équivalent (D21) d'au moins 8 µm,
ceux qui présentent un diamètre de sphère à volume équivalent (D21) inférieur à 35 µm forment une première quantité partielle ;
ceux qui présentent un diamètre de sphère à volume équivalent (D21) supérieur ou égal à 35 µm forment une deuxième quantité partielle ;
les noyaux durs (21) de la première quantité partielle présentent un premier diamètre de sphère à volume équivalent moyen dans la plage allant de 10 µm à 30 µm ; et
les noyaux durs (21) de la deuxième quantité partielle présentent un deuxième diamètre de sphère à volume équivalent moyen dans la plage allant de plus de 30 µm à 145 µm.

6. Insert augmentant le coefficient de frottement selon la revendication 1, dans lequel les noyaux durs (21) présentent chacun une dureté de Mohs d'au moins 8.

7. Insert augmentant le coefficient de frottement selon la revendication 1, dans lequel le promoteur d'adhésion (22) est constitué par un des matériaux suivants ou comprend au moins un des matériaux suivants : un métal ; un alliage ; une matière plastique ; un matériau organique.

8. Insert augmentant le coefficient de frottement selon la revendication 1, dans lequel le support composite (1) présente un premier côté principal (1t) et un deuxième côté principal (1b) opposé au premier côté principal (1t), la totalité des noyaux durs (21) étant agencés uniquement au niveau de et/ou sur le premier côté principal (1t), et non au niveau de ou sur le deuxième côté principal (1b).

9. Insert augmentant le coefficient de frottement selon la revendication 1, dans lequel le support composite (1) présente un premier côté principal (1t) et un deuxième côté principal (1b) opposé au premier côté principal (1t), la totalité des noyaux durs (21) étant agencés aussi bien au niveau de ou sur le premier côté principal (1t) qu'au niveau de ou sur le deuxième côté principal (1b).

10. Insert augmentant le coefficient de frottement selon la revendication 1, dans lequel le garnissage de surface avec lequel le support composite (1) est garni avec les noyaux durs (21), dont le diamètre de sphère à volume équivalent (D21) est d'au moins 8 µm, représente de 5 % à 70 % de la surface de base (A1) du support composite (1).

11. Insert augmentant le coefficient de frottement selon la revendication 1, dans lequel, pour une pluralité des noyaux durs (21), qui présentent un diamètre de sphère à volume équivalent (D21) d'au moins 8 µm, les promoteurs d'adhésion (22), au moyen desquels les noyaux durs (21) de cette pluralité sont reliés avec le support composite (1), ne forment pas une couche continue, et sont plutôt espacés les uns des autres en paires pour des paires quelconques de noyaux durs (21) de cette pluralité.

12. Procédé, avec lequel un insert augmentant le coefficient de frottement (3) pourvu d'un support composite comprimable (1) est fabriqué, qui comprend :
du verre et/ou de la céramique (12) ; ainsi que
un support en matière plastique configuré sous la forme d'un non-tissé (11) ; et
une pluralité de noyaux durs (21), parmi lesquels chacun
- présente un diamètre de sphère à volume équivalent (D21) d'au moins 8 µm ; et
- est relié au moyen d'un promoteur d'adhésion (22) avec le support composite (1) ; et
dans lequel le support composite non comprimé (1) présente une épaisseur (d1) dans la plage allant de 10 µm à 100 µm ; et/ou l'insert augmentant le coefficient de frottement (3) présente lorsque le support composite (1) est non comprimé une épaisseur (d3) inférieure ou égale à 420 µm ;
le procédé comprenant les étapes suivantes :
la préparation d'un support composite (1), qui comprend :
du verre et/ou de la céramique (12) ; ainsi que une matière plastique (11) ;
la préparation d'une pluralité de noyaux durs (21), parmi lesquels chacun présente un diamètre de sphère à volume équivalent (D21) d'au moins 8 µm ;
l'application des noyaux durs (21) sur le support composite (1) ; et
la liaison par accouplement de matière des noyaux durs (21) avec le support composite (1) au moyen d'un promoteur d'adhésion activé thermiquement et/ou chimiquement (22).

13. Insert augmentant le coefficient de frottement selon l'une quelconque des revendications précédentes, dans lequel le support composite (1) présente une porosité d'au moins 15 %, notamment comprise entre 30 % et 70 %.

14. Procédé selon la revendication 12, dans lequel chacun des noyaux durs (21) est revêtu avec le promoteur d'adhésion (22) et forme avec celui-ci un grain (2) ; dans chacun des grains (2), le promoteur d'adhésion (22), avec lequel le grain en question (2) est revêtu, représentant une proportion en poids du poids du grain en question (2), la valeur de moyenne arithmétique de ces proportions en poids se situant dans la plage allant de 5 % en poids à 80 % en poids, dans le cas d'un promoteur d'adhésion métallique (22) de préférence dans la plage de 30 % en poids et 70 % en poids, dans le cas d'un promoteur d'adhésion (22) en matière plastique de préférence dans la plage de 5 % en poids et 50 % en poids.

15. Procédé de fabrication d'un joint à ajustement serré entre un premier partenaire d'assemblage (101) et un deuxième partenaire d'assemblage (102) en utilisant un insert augmentant le coefficient de frottement (3), qui comprend :
du verre et/ou de la céramique (12) ; ainsi que
un support en matière plastique configuré sous la forme d'un non-tissé (11) ; et
une pluralité de noyaux durs (21), parmi lesquels chacun
- présente un diamètre de sphère à volume équivalent (D21) d'au moins 8 µm ; et
- est relié au moyen d'un promoteur d'adhésion (22) avec un support composite comprimable (1) ; et dans lequel le support composite non comprimé (1) présente une épaisseur (d1) dans la plage allant de 10 µm à 100 µm ; et/ou l'insert augmentant le coefficient de frottement (3) présente lorsque le support composite (1) est non comprimé une épaisseur (d3) inférieure ou égale à 420 µm ; et
selon le procédé, le premier partenaire d'assemblage (101) et le deuxième partenaire d'assemblage (102), pendant que l'insert augmentant le coefficient de frottement (3) est agencé entre eux, étant pressés l'un contre l'autre de telle sorte que, parmi une pluralité des noyaux durs (21), chacun soit respectivement pressé partiellement aussi bien dans le premier partenaire d'assemblage (101) que dans le deuxième partenaire d'assemblage (102).
